# EUROPEAN PATENT SPECIFICATION

(11) **EP 4 342 747 B1**
(45) Date of publication and mention of the grant of the patent: **20.08.2025**
(21) Application number: 23198709.0
(22) Date of filing: 21.09.2023
(51) Int. Cl.: B60T 5/00, B60T 7/04, B60T 7/12, B60T 8/1755, B60T 8/176, F16D 65/78, F16D 65/813, F16D 65/833, F16D 65/84, F16D 65/853

(54) **MOTOR VEHICLE AND A BRAKING CONTROL METHOD FOR THE MOTOR VEHICLE**
KRAFTFAHRZEUG UND BREMSSTEUERVERFAHREN FÜR DAS KRAFTFAHRZEUG
VÉHICULE AUTOMOBILE ET PROCÉDÉ DE COMMANDE DE FREINAGE POUR VÉHICULE AUTOMOBILE

(30) Priority: 22.09.2022 IT 202200019416
(43) Date of publication of application: 27.03.2024
(73) Proprietor: FERRARI S.p.A., 41100 Modena (IT)
(72) Inventor: CANESTRI, Jacopo, 41100 MODENA (IT); CAVANNA, Martino, 41100 MODENA (IT)
(74) Representative: Studio Torta S.p.A.

(56) References cited:
- EP-A1- 0 869 293
- EP-A1- 3 378 712
- DE-A1- 1 530 681
- DE-A1- 10 057 880
- DE-A1- 10 349 664
- DE-A1- 102018 222 754

## Description

### CROSS-REFERENCE TO RELATED APPLICATIONS

This patent application claims priority from Italian patent application no. 102022000019416 filed on September 22, 2022.

### TECHNICAL FIELD

The invention relates to a motor vehicle and to a braking control method for the motor vehicle.

### BACKGROUND

Motor vehicles are known, which comprise an engine, for wheels and a braking system, which can be operated in order to exert braking torques upon the respective wheels and reduce the speed of the motor vehicle.

Known motor vehicles further comprise a control member, for example a brake pedal, which is designed to control the braking system and can be activated by the driver.

More in detail, the braking system comprises, for each wheel:
- a brake caliper;
- a disc, which can rotate with the wheel in an integral manner; and
- a fluidic line, where an operating liquid, for example oil, flows and which is fluidically connected to the control member;

Each brake caliper comprises, in turn:
- a support body housing the relative brake disc;
- a pair of pads, which are movable between respective rest positions, in which they are spaced apart from the relative brake disc, and respective operating positions, in which they come into contact with the relative brake disc and exert the braking torque upon the relative wheel; and
- a pair of chambers fluidically connected to the relative fluidic line and accommodating, on the inside, the respective pads so that they can move between the corresponding rest and operating positions.

The activation of the control member determines an increase in the pressure of the operating liquid in the fluidic lines and a consequent increase in the pressure of the chambers housing the brake calipers. This happens when the operating liquid is substantially incompressible and, therefore, is capable of transmitting pressure in an effective manner and substantially without losses.

Said pressure increase determines the movement of the pads from the relative rest positions to the relative operating positions.

Top-of-the-range motor vehicles further comprise:
- a vehicle stability control system, which is operatively connected to the braking system and can be operated, in given operating situations of the motor vehicle, to have the braking system exert braking torques, if necessary even different ones, upon the respective wheels, so as to ensure a desired degree of stability of the motor vehicle;
- an anti-lock system, commonly known as ABS, which is also operatively connected to the braking system and can be operated so as to limit the braking torque acting upon the wheels and prevent the wheels from locking; and
- a control unit receiving, as an input, a plurality of signals representative of the operating situation of the motor vehicle and programmed to operate the stability control system and/or the anti-lock system in given operating situations.

More in detail, the stability control system of the motor vehicle is configured so as to have the braking system exert the braking torques to a suitable extent upon one or more wheels even when the control member is deactivated, so as to stabilize the motor vehicle.

On the contrary, the anti-lock system is configured so as to limit the aforesaid braking torques when the control member is active, namely during a motor vehicle braking phase requested by the driver, in order to avoid the risk of locking the motor vehicle.

More in detail, the stability control system of the motor vehicle comprises a hydraulic pump, which can be operated by the control unit, and respective first control valves, which are interposed along respective fluidic lines.

The control unit is programmed to move one or more first control vales to respective first operating positions, in which they allow the operating liquid pressurized by the hydraulic pump to reach the relative chambers through the respective fluidic lines, so as to exert respective braking torques upon the wheels.

The anti-lock system comprises, for each wheel, a relative second proportional valve, which is selectively movable by the control unit to a relative operating position, in which it is interposed along the relative fluidic line and reduces, proportionally to the command given by the control unit, the pressure of the operating liquid, so as to accordingly reduce the braking torque.

A prolonged activation of the braking system determines an increase in the temperature of the operating liquid.

More precisely, the quantity of operating liquid housed in the chambers of the calipers is heated by the heat generated by the braking action exerted by the pads upon the relative discs.

The Applicant found out that, under particularly severe prolonged braking conditions, there is the risk that said quantity of operating liquid reaches the corresponding boiling temperature and, consequently, bubbles are formed in the operating liquid.

Under these conditions, the mixture of operating liquid and bubbles present in the fluidic lines would no longer be completely incompressible, thus evidently jeopardizing the braking torque exerted upon the wheels following the activation of the control member and, hence, the overall safety of the motor vehicle.

This risk especially applies to the front wheels, which have to bear the largest part of the weight of the vehicle while braking.

Therefore, the risk of overheating of the operating liquid needs to be reduced.

Furthermore, said risk has to be reduced with not active intervention by the driver.

Finally, said risk has to be reduced without changing the configuration of the stability control system and of the anti-lock system normally present in the motor vehicle.

DE-A-10057880 and DE-A-10349664 disclose a motor vehicle according to the preamble of claim 1 and a braking control method for a motor vehicle according to claim 13.

### SUMMARY

The object of the invention is to provide a motor vehicle, which is capable of fulfilling at least one of the needs discussed above.

The aforesaid object is reached by the invention, as it relates to a motor vehicle as defined in claim 1.

Furthermore, the invention also relates to a braking control method for a motor vehicle as set forth in claim 13.

### BRIEF DESCRIPTION OF THE DRAWINGS

The invention will be best understood upon perusal of the following detailed description of two preferred embodiments, which are provided by way of non-limiting example, with reference to the accompanying drawings, wherein:
- figure 1 is a perspective view of a motor vehicle according to a first embodiment of the invention;
- figure 2 is a view from the top of the motor vehicle of figure 1;
- figure 3 schematically shows a braking control system of the motor vehicle of figures 1 and 2 in a first operating condition;
- figure 4 schematically shows the braking control system of the motor vehicle of figure 3 in a second operating condition;
- figure 5 schematically shows, on a larger scale, some details of the braking control system of figures 3 and 4;
- figures 6 to 8 show respective further details of the braking control system of figures 3 to 5 on a larger scale;
- figure 9 schematically shows a braking control system of a motor vehicle according to a second embodiment of the invention and in a first operating condition; and

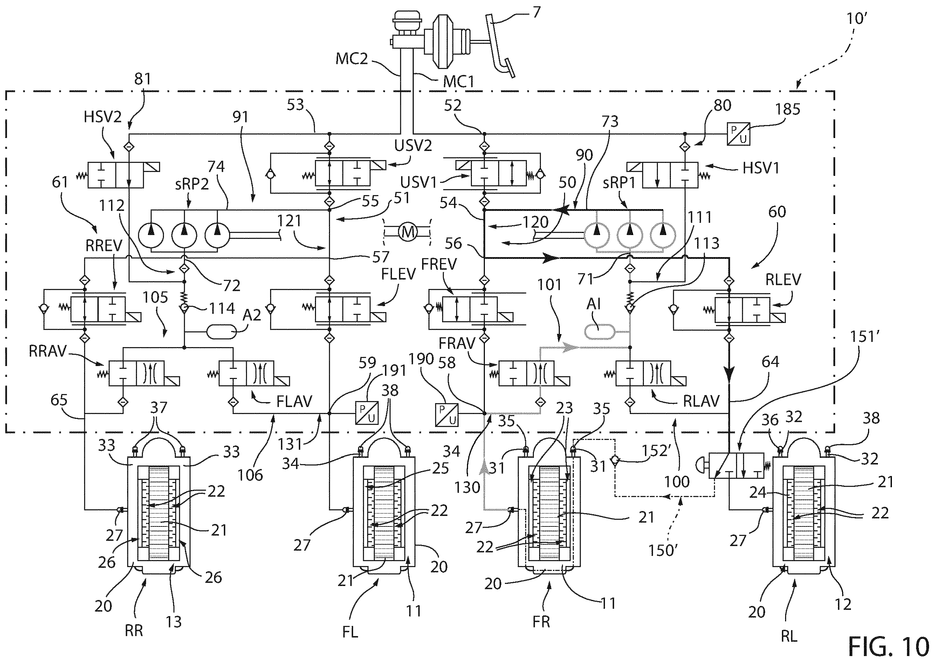

- figure 10 schematically shows the braking control system of figure 9 in a second operating position.

### DESCRIPTION OF EMBODIMENTS

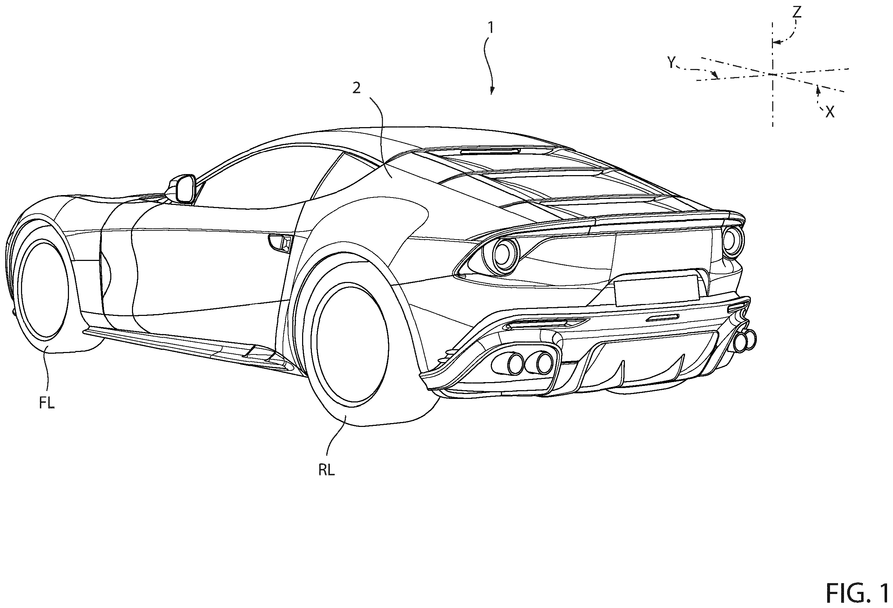

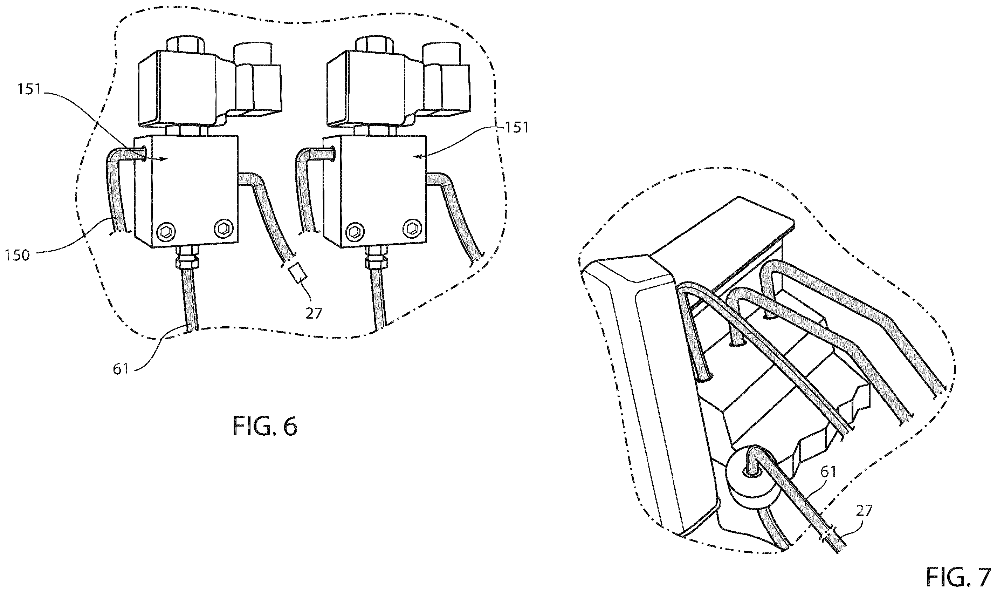

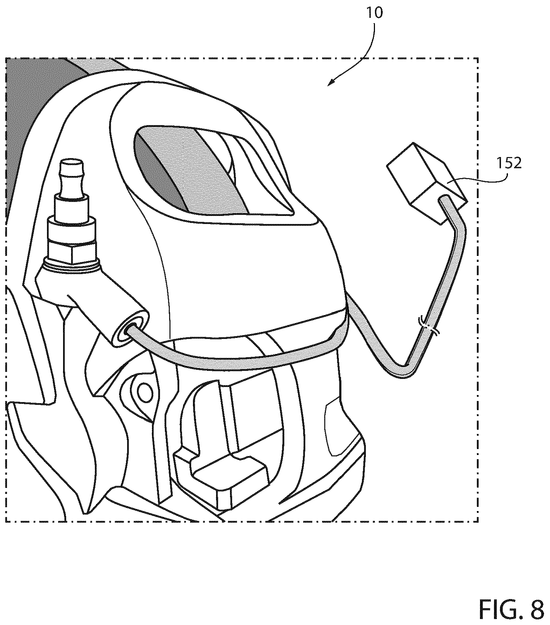

With reference to the figures 1 to 8 attached hereto, number 1 indicates a motor vehicle comprising a body 2 defining a passenger compartment and a plurality of wheels FL, RL, FR, RR.

Hereinafter, expressions such as "at the top", "at the bottom", "at the front", "at the back", "left", "right" and others similar to them are used with reference to a normal moving direction of the motor vehicle 1.

Furthermore, it is possible to define:
- a longitudinal axis X integral to the motor vehicle 1, which, in use, is horizontal and parallel to a normal moving direction of the motor vehicle 1;
- a transverse axis X integral to the vehicle 1, which, in use, is horizontal and orthogonal to the axis X; and
- an axis Z integral to the vehicle 1, which, in use, is vertical and orthogonal to the axes X, Y.

In particular, the wheels FL and FR are the left and right front wheels of the motor vehicle 1, respectively.

The wheels RL and RR are the left and right rear wheels of the motor vehicle 1, respectively.

The motor vehicle 1 further comprises, in a known manner, which is only schematically shown in the accompanying figures:
- an engine 6, which is designed to generate a torque exerted upon the wheels FL, RL, FR, RR;
- a brake pedal 7, which can be operated by the driver in order to exert braking torques upon the respective wheels FL, RL, FR, RR; and
- an accelerator pedal 8, which can be operated by the driver in order to adjust the torque generated by the engine 6.

In particular, the pedal 7 normally is in a deactivated operating state and can be switched to an active operating state by the driver.

The motor vehicle 1 further comprises:
- a braking control system 10 operatively connected to the pedal 7 and to the wheels FL, FR, RR, RL; and
- a plurality of braking devices 11, 12, 13, 14 associated with respective wheels FR, RL, RR, FL.

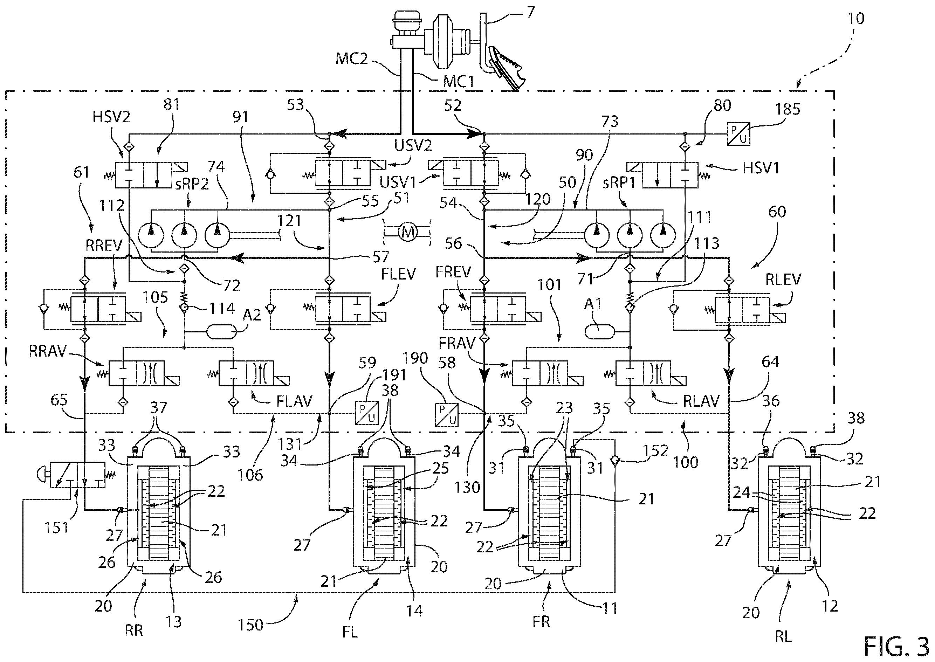

Each device 11, 12, 13, 14 comprises, in turn (Figure 3):
- a body 20;
- a disc 21, which can rotate angularly to a relative wheel FR, RL, RR, FL and is housed in the body 20;
- a pair of pads 22 housed inside the body 20 and movable, following the activation of the pedal 7, between respective neutral position, in which they are spaced apart from the relative disc 21, and respective operating positions, in which they are pressed against the disc 21 so as to exert a respective braking torque upon the relative wheel FR, RL, RR, FL.
   The body 20 of each device 11, 12, 13, 14 comprises, in turn;
- an inlet 27, through which an incompressible operating liquid, for example oil, is fed;
- a pair of chambers 23, 24, 26, 25 , which house, in a fluid-tight manner, the relative pads 22 and are fluidically connected to the respective inlet 27; and
- a pair of drains 31, 32, 33, 34 closed by respective caps 35, 36, 37, 38 and fluidically connected to the relative chambers 23, 24, 25, 26.

The chambers 23, 24, 26, 25 of each device 11, 12, 13, 14 are fluidically connected to one another.

In particular, the chambers 23, 24, 25, 26 extend on opposite sides of the relative pads 22, which are opposite one another with respect to the relative discs 21.

In this way, the pressure existing in the chambers 23, 24, 25, 26 exerts a pair of equal thrusts upon the relative pads 22 directed towards the relative disc 21.

The system 10 is designed to operate the braking devices 11 so as to:
- exert respective braking torques upon the wheels FL, FR, RL, RR following the movement of the brake pedal 7 to the active operating state;
- limit the braking torques exerted upon the wheels FL, FR, RL, RR following the activation of the brake pedal 7, so as to prevent the wheels FL, FR, RL, RR from locking, thus carrying out the function of a so-called ABS;
- exert suitable braking torques upon one or more wheels FL, FR, RL, RR when the pedal 7 is in the deactivated operating state and in case of skid of the motor vehicle 1, so as to stabilize the attitude of the motor vehicle 1, thus carrying out the function of a so-called ESP or VDC.

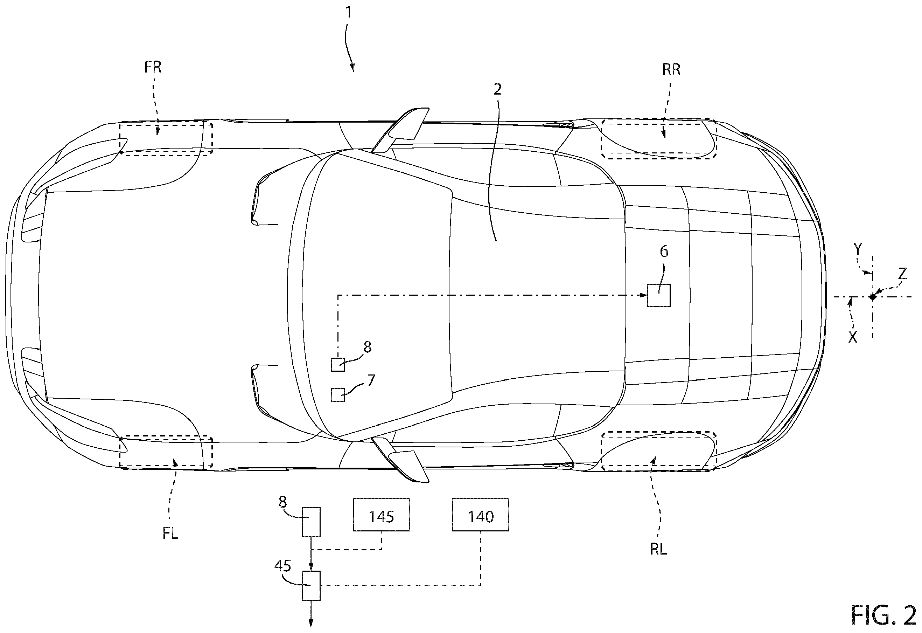

With reference to Figures 2 a 4, the system 10 comprises:
- a control unit 45 (schematically shown in Figure 2);
- a tank, which is filled with an incompressible operating liquid, for example oil, is operatively connected to the pedal 7 and is provided with a pair of deliveries MC1, MC2;
- a pair of fluidic lines 50, 51 extending between respective deliveries MC1, MC2 and respective inlets 27 of the bodies 20 of the devices 11, 14;
- a pair of control valves USV1, USV2 interposed along the fluidic lines 50, 51; and
- a pair of control valves FREV, FLEV interposed along the fluidic lines 50, 51 in a position fluidically interposed between the respective control valves USV1, USV2 and the inlets 27 of the bodies 20 of the respective devices 11, 14.

Each fluidic line 50, 51 further comprises, moving from the relative delivery MC1, MC2 towards the relative inlet 27 of the devices 11, 14:
- a section (52, 53) fluidically interposed between the relative delivery MC1, MC2 and the relative control valve USV1, USV2;
- a section 54, 55;
- a section 56, 57; and
- a section 58, 59 fluidically interposed between the relative control valve FREV, FLEV and the relative inlet 27 of the devices 11, 12.

In particular, the section 56, 57 is fluidically interposed between the respective section 54, 55 and the relative control valve FREV, FLEV.

Each fluidic line 50; 51 further comprises a segment 120, 121 interposed between the relative sections 54, 56; 55, 57.

Each control valve USV1, USV2, FREV, FLEV can be moved by the control unit 45 between:
- a relative open position, in which it allows the operating liquid to flow along the relative fluidic line 50, 51; and
- a relative closed position, in which it prevents the operating liquid from flowing along the relative fluidic line 50, 51.

The system 10 further comprises:
- a pair of fluidic lines 60, 61, each extending between a relative section 56, 57 of a fluidic line 50, 51 and the relative inlet 27 of the devices 13, 12;
- a pair of control valves RLEV, RREV interposed along the respective fluidic lines 60, 61.

Each fluidic line 60, 61 further comprises a relative section 64, 65 interposed between the relative control valve RLEV, RREV and the inlet 27 of the relative braking device 12, 13.

Each control valve RLEV, RREV can be moved by the control unit 45 between:
- a relative open position, in which it allows the operating liquid to flow along the relative fluidic line 60, 61; and
- a relative closed position, in which it prevents the operating liquid from flowing along the relative fluidic line 60, 61.

The system 10 further comprises:
- a motor M controlled by the control unit 45;
- a pair of groups of hydraulic pumps sRP1, sRP2, which can be operated by the motor M and have respective suction sections 71, 72 and respective delivery sections 73, 74;
- a pair of fluidic lines 80, 81, each extending from a relative delivery MC1, MC2 to a corresponding suction section 71, 72 of the groups of hydraulic pumps sRP1, sRP2;
- a pair of control valves HSV1, HSV2 interposed along respective fluidic lines 80, 81; and
- a pair of fluidic lines 90, 91, each extending between a relative delivery section 73, 74 and a relative section 54, 55 of a corresponding fluidic line 50, 51.

Each control valve HSV1, HSV2 can be moved by the control unit 45 between:
- a relative open position, in which it allows the operating liquid to flow along the relative fluidic line 80, 81; and
- a relative closed position, in which it prevents the operating liquid from flowing along the relative fluidic line 80, 81.

The system 10 further comprises:
- a tank A1;
- a fluidic line 100 extending between the section 64 of the fluidic line 60 and the tank A1;
- a fluidic line 101 extending between the section 58 of the fluidic line 50 and the tank A1; and
- a pair of control valves RLAV, FRAV interposed along respective fluidic lines 100, 101 and controlled by the control unit 45.

The system 10 finally comprises:
- a tank A2;
- a fluidic line 105 extending between the section 65 of the fluidic line 60 and the tank A2;
- a fluidic line 106 extending between the section 59 of the fluidic line 50 and the tank A2; and
- a pair of control valves RRAV, FLAV interposed along respective fluidic lines 105, 106 and controlled by the control unit 45.

The system 10 further comprises:
- a pair of fluidic lines 111, 112 extending between respective tanks A1, A2 and respective suction sections 71, 72 of corresponding pumps sRP1, sRP2; and
- a pair of non-return valves 113, 114 interposed along the fluidic lines 111, 112 and configured to allow the operating liquid to only flow from the relative tank A1, A2 towards the corresponding suction section 71, 72 and not in the opposite direction.

The fluidic lines 50, 51 further define a pair of segments 130, 131, each extending between a relative fluidic line 100, 101 and the relative chambers 24, 26.

Each control RLAV, FRAV; RRAV, FLAV can be moved by the control unit 45 between:
- a plurality of relative open positions, in which it allows the a corresponding operating liquid flow rate to flow along the relative fluidic line 100, 101; 105, 106; and
- a relative closed position, in which it prevents the operating liquid from flowing along the relative fluidic line 100, 101; 105, 106.

In the specific case shown herein, the control valves HSV1, HSV2, RLEV, RREV, FLEV, FREV are ON-OFF valves, namely they are only movable between the relative open position and the relative closed position.

The control valves RLAV, FRAV; RRAV, FLAV permit the flow of an operating liquid flow rate associated with the relative degree of opening.

The system 10 further comprises:
- a pressure sensor 185 arranged so as to detect the pressure existing in the area of the delivery MC1; and
- a pair of pressure sensors 190, 191 arranged so as to detect the pressures existing along respective fluidic lines 101, 106.

The motor vehicle 1 further comprises:
- a plurality of sensors 140 (only schematically shown in Figure 2) designed to generate respective first signals associated with the angular speeds of relative wheels FR, FL, RR, RL; and
- a sensor 145 (only schematically shown in Figure 2, as well) designed to generate a second signal associated with the degree of activation of the accelerator pedal 8.

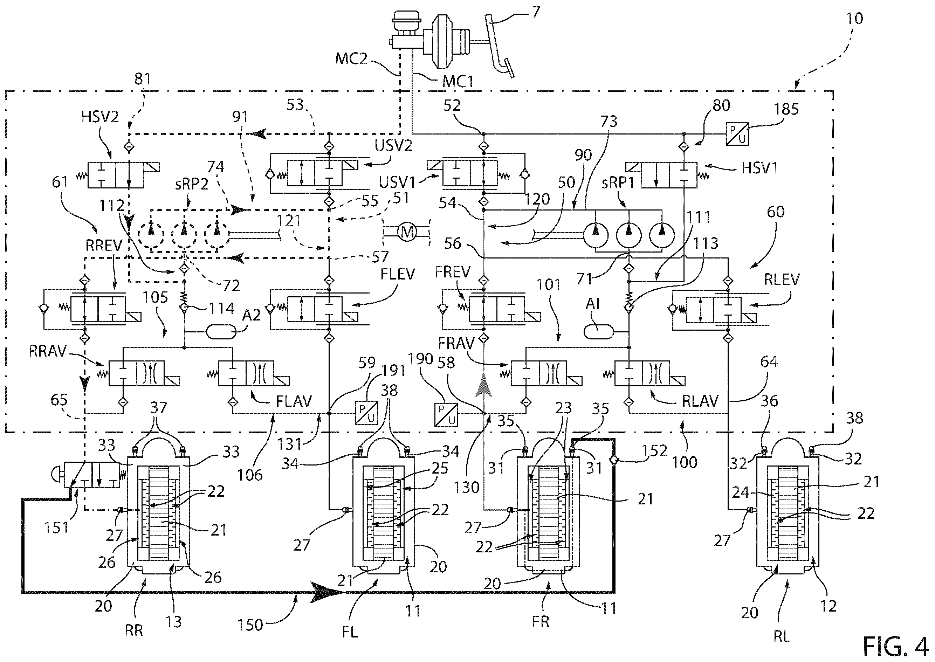

The system 10 advantageously comprises:
- a fluidic line 150 connected to the chamber 23; and
- a control valve 151 selectively movable between:
   a first position (Figure 4), in which it fluidically connects the fluidic line 150 to the fluidic line 61 and fluidically isolates the fluidic line 61 from the chamber 23; and
   a second position (Figure 3), in which it fluidically isolates the fluidic line 150 from the fluidic line 61 and fluidically connects the fluidic line 61 to the chamber 23;
   the control unit 45 is programmed to:
      - acquire an active or deactivated operating state of the pedal 7 and a plurality of operating parameters of the motor vehicle 1; and
      - hold the control valve 151 in the second position and move the control valve 151 to the first position for a limited amount of time, when the pedal 7 is in the deactivated operating state and when said first and second signals exceed respective predetermined threshold values.

More precisely, the fluidic line 150 directly extends between the chamber 23 and the fluidic line 61 without the interposition of any storage and/or expansion tank for the operating liquid.

The system 10 further comprises a non-return valve 152 fluidically interposed between the control valve 151 and the chamber 23, so that the operating liquid can only flow from the fluidic line 61 to the chamber 23 and not vice versa.

In particular, the fluidic line 61 ends in the area of one of the drains 31.

In the specific case shown herein, the control valve 151 is a three-way valve.

The control unit 45 is further programmed to move the control valve 151 to the first position, only if the ABS, ESC system are not enabled, as discussed more in detail below.

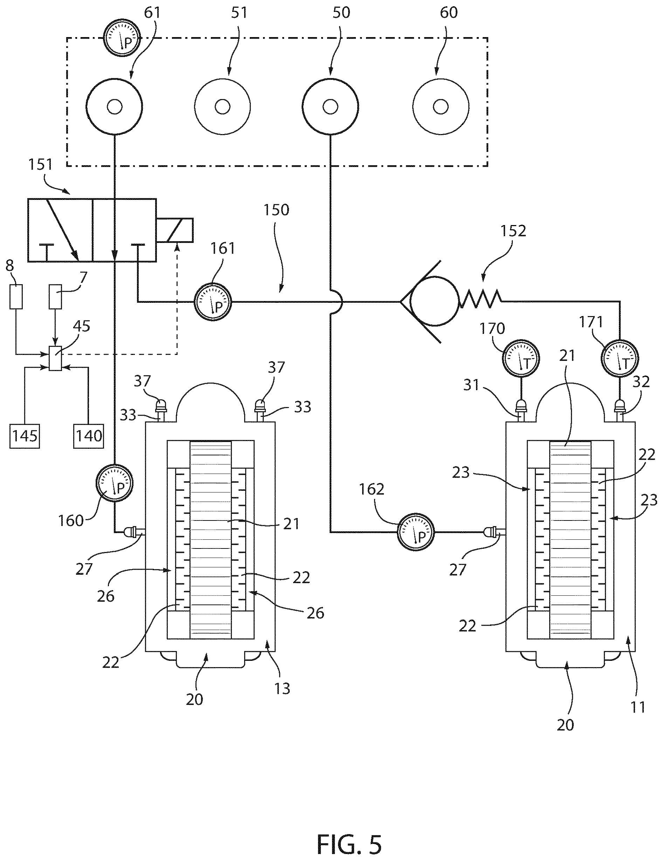

The system 10 further comprises (Figure 5):
- a pressure sensor 160 arranged along the fluidic line 61 in a position fluidically interposed between the control valve 151 and the chamber 23;
- a pressure sensor 161 arranged along the fluidic line 150 in a position fluidically interposed between the control valve 151 and the non-return valve 152; and
- a pressure sensor 162 arranged along the fluidic line 50 in a position fluidically interposed between the chamber 23 and the valve FREV.

The system 10 finally comprises:
- a temperature sensor 170 arranged along the fluidic line 150 in a position fluidically interposed between the non-return valve 152 and one of the drains 31 of the chamber 23; and
- a temperature sensor 171 arranged along the fluidic line 150 in the area of the other one of the drains 31 of the chamber 23.

The operation of the system 10 will now be described with reference to a vehicle braking condition set by the driver, namely a condition in which the pedal 7 is moved to the active operating state, shown in Figure 3.

In the braking condition set by the driver, the control unit 45 holds the control valves USV1, USV2, FREV, RLEV, FLEV, RREV in the respective open positions.

The control unit 45 further holds the control valves HSV1, HSV2, FRAV, FLAV, RLAV, RRAV in the respective open positions and keeps the motor M deactivated.

Finally, the control unit 45 holds the control valve 151 in the second position, in which it prevents the operating liquid from flowing in the fluidic line 150.

Consequently, the command given by the driver determines, through the deliveries MC1, MC2, an increase in the pressure of the operating liquid in the fluidic lines 50, 51, 60, 61 and in the respective chambers 23, 25, 24, 26. The pressure reigning in the chambers 23, 25, 24, 26 determines the movement of the corresponding pads 22 to the respective operating positions, in which they exert the braking torques upon the discs 21 of the corresponding wheels FR, FL, RL, RR.

When the brake pedal 7 is released and moved to the deactivated operating state, the pressure of the operating liquid in the fluidic lines 50, 51, 60, 61 and in the respective chambers 23, 25, 24, 26 decreases. Consequently, the pads 22 go back to the relative neutral positions, in which they do not exert the respective braking torques upon the discs 21 of the corresponding wheels FR, FL, RL, RR.

The operation of the system 10 will now be described with reference to a condition in which the pedal 7 is active and the system 10 limits the braking torques exerted upon the wheels FR, FL, RL, RR in order to prevent the wheels FR, FL, RL, RR from locking, thus carrying out the function of a so-called ABS.

More in detail, the control unit 45 receives as an input, from the sensors 140, first signals representative of the fact that one or more of the wheels FR, FL, RL, RR is locked and processes the braking torque value exceeding the grip limit for the aforesaid one or more wheels FR, FL, RL, RR.

Furthermore, the control unit 45, starting from the configuration described above with reference to the braking condition set by the driver, moves the corresponding valve/s FLAV, FRAV, RLAV, RRAV to one of the respective open positions with degrees of opening associated with the quantities of braking torques exceeding the grip limit.

Consequently, depending on the degree of opening of the valves FLAV, FRAV, RLAV, RRAV, respective quantities of operating liquid flow from the fluidic lines 51, 50, 60, 61 into the respective fluidic lines 100, 101, 105, 106 and gather themselves in the corresponding tanks A1, A2.

This reduces the pressure in one or more of the chambers 23, 24, 25, 26 as well as the consequent braking torque exerted upon the respective wheels FL, FR, RL, RR until the wheels FL, FR, RL, RR are no longer locked.

The control unit 45 is further programmed to move the valves FLAV, FRAV, RLAV, RRAV back to the respective closed positions once the corresponding wheels FL, FR, RL, RR are no longer locked.

The operation of the system 10 will now be described with reference to a condition in which the pedal 7 is in the deactivated operating state and the system 10 generates suitable braking torques to be exerted upon the wheels FR, FL, RL, RR in order to stabilize the attitude of the motor vehicle 1 in case, for example, of a skid, this carrying out the function of a so-called ESP or VDC.

More in detail, the control unit 45 receives, as an input, a signal representative of an incorrect attitude of the motor vehicle 1 and generates suitable values of the braking torques to be exerted upon the respective wheels FL, FR, RR, RL in order to restore a condition of stability of the motor vehicle 1.

The control unit 45, in particular, moves the control valves USV1, USV2, FREV, FLEV to the respective closed positions and the control valves HSV1, HSV2 to the relative open positions and operates the motor M that activates the pumps sRP1, sRP2.

The control unit 45 further holds the valve 151 in the second position, the valves RLEV, RREV in the respective open positions and the valves FRAV, FLAV, RRAV, RLAV in the respective closed positions.

In this way, the operating liquid flows in the fluidic lines 80, 81 until it reaches the suction sections 71, 72 of the pumps sRP1, sRP2. The pumps sRP1, sRP2 increase the pressure of the operating liquid in the area of the respective delivery sections 73, 74.

The operating liquid with an increased pressure occupies the fluidic lines 90, 91, the respective segments 120, 121 and the fluidic lines 60, 61 until it invades and increases the pressure reigning in the chambers 24, 26 and exerts braking torques upon the respective wheels RL, RR.

Said braking torques stabilize the motor vehicle 1.

The operation of the system 10 will now be described with reference to a condition in which the pedal 7 is in the deactivated operating state and the control unit 45 controls the valve 151 so as to determine a recirculation of the operating liquid through the fluidic line 150.

With reference to a condition shown in Figure 4, in which the pedal 7 is in the deactivated operating state, the control unit 45 acquires, as in input:
- from the sensors 140, first signals associated with angular speeds of the wheels FR, FL, RR, RL;
- from the sensor 145, the second signal associated with the degree of activation of the pedal 8.

The control unit 45 further generates a third signal representative of the fact that the valves FRAV, FLAV, RRAV, RLAV are in the respective closed positions and that the motors M are deactivated, namely that the ABS and ESP functions are disabled.

The control unit 45 is programmed to move the valve 151 to the first position (Figure 4) for the predetermined amount of time, when the first and second signals exceed a threshold value and, preferably, the third signal was generated.

The control unit 45 is further programmed to move, starting from the configuration described above with reference to the braking condition set by the driver, the valves USV2, FLEV to the respective closed positions, the valve HSV2 to the open position and to activate the motor M that operates the pump sRP2.

In this way, the operating liquid flows along the fluidic line 81 until it reaches the suction section 72 of the pump sRP2. The pump sRP2 increases the pressure of the operating liquid in the area of the delivery section 74. The operating liquid with an increased pressure occupies the fluidic line 91, the segment 121 and the fluidic line 61.

Subsequently, the operating liquid flows along the fluidic line 150 from the fluidic line 61 to the chamber 23, flowing through the drain 31 associated with the chamber 23.

The non-return valve 152 prevents the operating liquid from returning from the chamber 23 to the valve 151.

The operating liquid flows through the inlet 27 and flows back from the chamber 23 along the fluidic line 50 up to the delivery MC1.

In this way, the operating liquid can cool down along the fluidic line 150 by flowing away from the chamber 23, where the temperature is particularly high due to the braking torque previously exerted upon the wheel RR.

The control unit 45 is programmed to move the valve 151 back to the second position at the end of the predetermined amount of time.

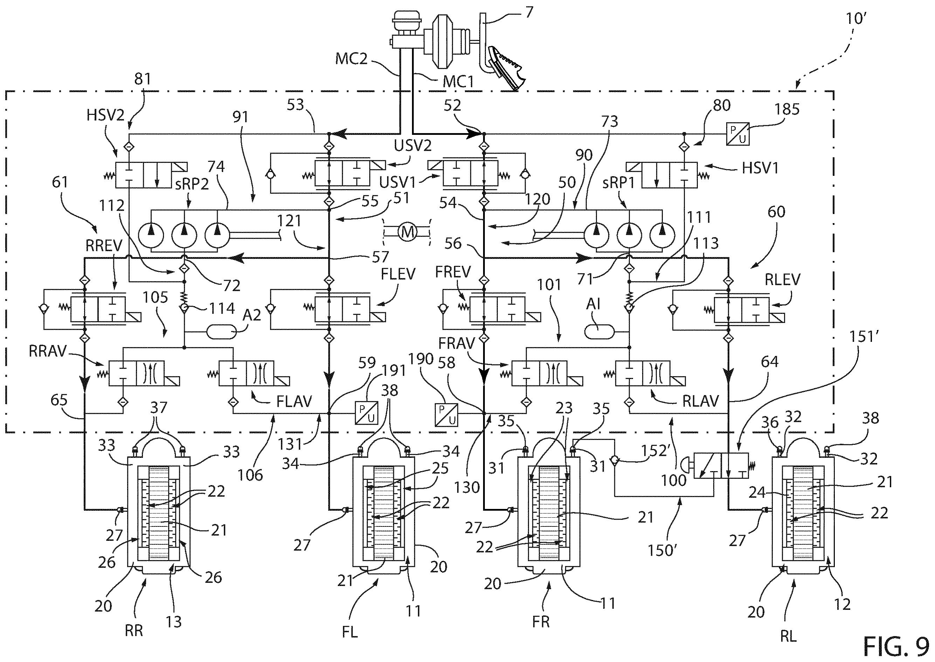

With reference to Figure 9, number 10' indicates a braking control system according to a second embodiment of the invention.

The system 10' is similar to the system 10 and will be described below only in those aspects that distinguish the former from the latter; similar or equivalent parts of the systems 10, 10' will be indicated, when possible, with the same reference numbers.

The difference between the system 10' and the system 10 lies in the fact that the fluidic line 150' extends between the fluidic line 60 and a drain 31 of the chamber 23.

More precisely, the fluidic line 150' directly extends between the chamber 23 and the fluidic line 60 without the interposition of any storage and/or expansion tank for the operating liquid.

The non return valve 152' is arranged on the fluidic line 150' in a position fluidically interposed between the control valve 151' and the chamber 23 and is configured to allow the operating liquid to only flow from the control valve 151' to the chamber 23 and not in the opposite direction.

The operation of the system 10' is described only in those aspect that distinguish it from the operation of the system 10.

In particular, the control unit 45' differs from the control unit 45 in that it is programmed, when the first and the second signals exceed a threshold value and, preferably, the third signal was generated, to:
- move the valves USV1, FREV to the closed position;
- move the valve FRAV to one of the relative open positions; and
- activate the motor M so as to operate the pump sRP1.

In this way, when the control valve 151' is in the first position, the operating liquid recirculates through the fluidic line 150, 150', the segment 130 of the fluidic line 50, the fluidic line 101, fills the tank A1 and reaches the suction section 71 of the pump sRP1 through the relative fluidic line 111.

The pump sRP1 increases the pressure of the operating liquid in the area of the delivery section 73.

The operating liquid with an increased pressure occupies the fluidic line 90, the segment 120 of the fluidic line 50 and the fluidic line 60 until it reaches the valve 151' arranged in the first position.

The disclosure above reveals evident advantages that can be obtained with the invention.

More in detail, the system 10, 10' comprises a fluidic line 150, 150', which is fluidically connected to the chambers 23 and can selectively be connected to the fluidic line 60, 60' through the activation of the control valve 151, 151', when the pedal 7 is in the deactivated operating state and the parameters exceed respective threshold values.

In this way, the operating liquid recirculates along the fluidic line 150', thus flowing away from the high-temperature chamber 23, for an amount of time that is sufficient for it to cool down.

This significantly reduces or even eliminates the risk of overheating and evaporation of the operating liquid, which remains incompressible even after the application of intense braking torques to the wheels FL, RL, FR, RR.

This ensures an ideal operation of the braking devices 11, 12, 13, 14 even under particularly severe use conditions.

The control unit 45, 45' ensures the movement of the control valve 151, 151' to the first position - and, hence, the consequent cooling of the operating liquid for a predetermined amount of time - in an automatic manner and when necessary with the pedal 7 in the deactivated operating state and the return of the control valve 151, 151' to the second position at the end of the predetermined amount of time.

The non-return valve 152, 152' ensures that the operating liquid does not return to the chamber 23 along the fluidic line 150, 150'.

The drains 31, 32, 33, 34 normally provided in the bodies 20 of the devices 11, 12, 13, 14 are used to fluidically connect the fluidic line 150, 150' to the chamber 23, thus reducing the need for further additional parts.

The hydraulic pumps sRP1, sRP2 and the valves HSV1, HSV2, USV1, USV2, FLEV, FREV, RLEV, RREV, FRAV, FLAV, RLAV, RRAV normally present in the system 10, 10' to carry out functions known as ABS and ESP or VDC are controlled by the control unit 45, 45' so as to permit the recirculation of the operating liquid through the fluidic line 150, 150' when the control valve 151, 151' is arranged in the first position, thus allowing the operating liquid to cool down using the already available layout of the control system 10, 10'.

Finally, the motor vehicle 1 and the method according to the invention can be subjected to changes and variations, which, though, do not go beyond the scope of protection set forth in the appended claims.

In particular, the fluidic line 150 could extend between the chamber 24 associated with the wheel FL and the fluidic line 60.

The fluidic line 150' could extend from the chamber 24 associated with the wheel FL to the fluidic line 61.

## Claims

1. A motor vehicle (1) comprising:
- a first wheel (FR) and a second wheel (RL, RR);
- a first control member (7), which can be operated so as to cause a braking action exerted upon said first wheel (FR) and second wheel (RR; RL);
- a first braking device (11) and a second braking device (13, 12), which can be operated by means of said first control member (7) so as to exert a first braking torque upon said first wheel (FR) and a second braking torque upon said second wheel (RR, RL), respectively;
said first braking device (11) comprising:
- a first body (20);
- a first disc (21) angularly integral to the relative first wheel (FR) and housed inside said first body (20);
- at least one first pad (22) housed inside said first body (20) and movable between a neutral position, in which it is spaced apart from said first disc (21), and an operating position, in which it comes into contact with said first disc (21) so as to exert said first braking torque;
- a first chamber (23) delimited by said first body (21) and housing, on the inside, said at least one first pad (22);
said second braking device (13, 12) comprising:
- a second body (20);
- a second disc (21) angularly integral to the relative second wheel (RR, RL) and housed inside said second body (20);
- at least one second pad (22) housed inside said second body (20) and movable between a second neutral position, in which it is spaced apart from said second disc (21), and an operating position, in which it comes into contact with said second disc so as to exert said second braking torque;
- a second chamber (26, 24) delimited by said second body (20) and housing, on the inside, said at least one second pad (22);
said motor vehicle (1) comprising a braking control system (10, 10') operatively connected to said first control member (7);
said braking control system (10, 10') comprising, in turn:
- a first fluidic line (50) fluidically connected to said first control member (7) and to said first chamber (23) and designed to house said operating liquid;
- a second fluidic line (61, 60) fluidically connected, at least in an indirect manner, to said first control member (7) and to said second chamber (26, 24) and designed to house said operating liquid;
said first control member (7) being capable of being operated so as to raise the pressure of said operating liquid inside said first and second fluidic line (50, 51; 61, 60) and to move said first pad (22) from said first neutral position to said first operating position and said second pad (22) from said second neutral position to said second operating position;
**characterized in that** it comprises:
- a third fluidic line (150, 150') fluidically connected to said first chamber (23); and
- a first control valve (151, 151') selectively movable between:
a first position, in which it fluidically connects said third fluidic line (150, 150') to said second fluidic line (61, 60) and fluidically isolates said second fluidic line (61, 60) from said second chamber (26, 24);
a second position, in which it fluidically isolates said third fluidic line (150, 150') from said second fluidic line (61, 60) and fluidically connects said second fluidic line (61, 60) to the relative second chamber (26, 24); and
- a control unit (45, 45') programmed to acquire an active or deactivated operating state of said first control member (7) and a plurality of operating parameters of said motor vehicle (1);
said control unit (45, 45') being further programmed to move said first control valve (151, 151') from said second position to said first position for a limited amount of time, when said first control member (7) is in the deactivated operating state and when said parameters exceed respective predetermined threshold values.

2. The motor vehicle according to claim 1, **characterized in that** it comprises:
- an engine (6) designed to apply respective torques to said first and second wheel (FR; RR, RL); and
- a second control member (8), which can be operated so as to adjust said engine (6);
said parameters comprising at least a driving speed of said motor vehicle (1) and a level of operation of said second control member (8);
said control unit (45, 45') being programmed to:
- move said first control valve (150, 150') from said second position to said first position, when said driving speed exceeds a first threshold value and said level of operation of said first control member (8) exceeds a second threshold value; and
- move said second control valve (150, 150') back to said second position at the end of said amount of time.

3. The motor vehicle according to claim 1 or 2, **characterized in that** at least said first body (20) of said first braking device (11) comprises a first and a second draining opening (31) fluidically connected to said first chamber (23); said third fluidic line (150, 150') extending from said first control valve (151, 151') to said second draining opening (31).

4. The motor vehicle according to any one of the preceding claims, **characterized in that** it comprises a non-return valve (152, 152') interposed along said third fluidic line (150, 150') between said first control valve (151, 151') and said first chamber (23) and configured so as to prevent said operating liquid from returning from said first chamber (23) towards said first control valve (151, 151').

5. The motor vehicle according to any one of the preceding claims, **characterized in that** said first control member (7) comprises, in turn, a first and a second delivery (MC1, MC2);
said motor vehicle (1) further comprising:
- a third wheel (FL) and a fourth wheel (RR);
- a third braking device (14) comprising a third chamber (25) and capable of being operated by means of said first control member (7) so as to exert a third braking torque upon said third wheel (FL); and
- a fourth braking device (13) comprising a fourth chamber (26) and capable of being operated by means of said control member (7) so as to exert a fourth braking torque upon said fourth wheel (RR);
said braking control system (10, 10') comprising, in turn:
- a fourth fluidic line (51) fluidically connected, in an indirect manner, to said first control member (7) and to said third chamber (25) and designed to house said operating liquid; and
- a fifth fluidic line (61) fluidically connected, at least in an indirect manner, to said first control member (7) and to said fourth chamber (26) and designed to house said operating liquid;
each one of said first and fourth fluidic line (50, 51) comprising, in turn:
- a relative second control valve (USV1, USV2);
- a relative third control valve (FREV, FLEV) arranged in a position fluidically interposed between the relative second control valve (USV1, USV2) and the relative first chamber (23) or third chamber (25);
- a relative first section (52, 53) fluidically interposed between the relative delivery (MC1, MC2) and the relative second control valve (USV1, USV2);
- a relative second section (54, 55) and a relative third section (56, 57) fluidically interposed between the relative second control valve (USV1, USV2) and the relative third control valve (FREV, FLEV);
- a relative fourth section (58, 59) fluidically interposed between the relative third control valve (FREV, FLEV) and the relative first or third chamber (23, 25); and
- a relative segment (120, 121) fluidically interposed between a relative third section (56, 57) and a corresponding fourth section (58, 59);
each third section (56, 57) being fluidically interposed between a relative second section (55, 56) and the corresponding third control valve (FREV, FLEV);
said second fluidic line (60) extending between said second chamber (24) and said third section (56) of said first fluidic line (50) or defining said fifth fluidic line (61);
said fifth fluidic line (61) extending between said fourth chamber (26) and said third section (57) of said fourth fluidic line (51);
each one of said second and fifth fluidic line (60, 61) further comprising:
- a relative fourth control valve (RLEV, RREV) arranged in a position fluidically interposed between the relative third section (56, 57) of a relative first and fifth fluidic line (50, 51) and the corresponding second or fourth chamber (24, 26);
each one of said second and third control valve (USV1, USV2; FREV, FLEV) being selective movable between:
a relative second and third open position, in which they allow said operating liquid to flow along the corresponding first and fourth fluidic line (50, 51); and
a relative second and third closed position, in which they prevent said operating liquid from flowing along the corresponding first and fourth fluidic line (50, 51);
each fourth control valve (RLEV, RREV) being selectively movable between a relative fourth open position, in which it allows said operating liquid to flow along the corresponding second or fifth fluidic line (60, 61), and a fourth closed position, in which it prevents said operating liquid from flowing along the corresponding second or fifth fluidic line (60, 61);
said braking control system (10, 10') further comprising:
- a pair of hydraulic pumps (sRP1, sRP2), each capable of being selectively operated so as to move said operating liquid from a respective fifth suction section (71, 72) to a corresponding sixth delivery section (73, 74);
- a pair of sixth fluidic lines (80, 81), each fluidically interposed between a respective second section (52, 53) of a respective first or fourth fluidic line (50, 51) and the respective fifth suction section (71, 72) of a corresponding hydraulic pump (sRP1, sRP2);
- a pair of seventh fluidic lines (90, 91), each fluidically interposed between the relative sixth delivery section (73, 74) of a corresponding hydraulic pump (sRP1, sRP2) and said second section (54, 55) of a corresponding one of said first or fourth fluidic line (50, 51);
- a pair of fifth control valves (HSV1, HSV2) interposed along respective sixth fluidic lines (80, 81);
each fifth control valve (HSV1, HSV2) being selectively movable between:
a relative fifth open position, in which it allows said operating liquid to flow along the corresponding sixth fluidic line (80, 81); and
a relative fifth closed position, in which it prevents said operating liquid from flowing along the corresponding sixth fluidic line (80, 81);
said control unit (45, 45') being programmed to hold, in case of acquisition of an active operating state of said first control member (7) to place:
- said first control valve (151, 151') in said second position;
- said second, third and fourth control valve (USV1, USV2; FREV, FLEV; RLEV, RREV) in the respective second, third and fourth open position;
- said fifth control valves (HSV1, HSV2) in the respective fifth closed positions; and
- said hydraulic pumps (sRP1, sRP2) deactivated.

6. The motor vehicle according to claim 5, **characterized in that** said braking control system (10, 10') further comprises:
- a first tank (A1) associated with said first and fourth fluidic line (50, 60); and
- a second tank (A2) associated with said second and fifth fluidic line (51, 61);
- a pair of eighth fluidic lines (101, 106) fluidically interposed between respective fourth sections (58, 59) of the corresponding first and fourth fluidic line (50, 51) and said respective first and second tank (A1, A2);
- a pair of sixth control valves (FRAV, FLAV) interposed along respective eighth fluidic lines (101, 106) and selectively movable between respective sixth closed positions, in which they prevent said operating liquid from flowing along respective eighth fluidic lines (101, 106), and a plurality of respective sixth open positions, in which they allow respective quantities of operating liquid to flow along respective eight fluidic lines (101, 106);
- a pair of ninth fluidic lines (100, 105) fluidically interposed between respective sixth sections (64, 65) of said corresponding second or fifth fluidic line (61, 6) and said respective first and second tank (A, A2); each sixth section (64, 65) being fluidically interposed between said fourth control valve (RREV, RLEV) and the relative second and fourth chamber (24, 26);
- a pair of tenth proportional control valves (RLAV, RRAV) interposed along said ninth fluidic lines (100, 105) and each selectively movable between a relative seventh closed position, in which it prevents said operating liquid from flowing along the corresponding ninth fluidic line (100, 105), and a plurality of respective seventh open positions, in which they allow respective quantities of operating liquid to flow along the corresponding ninth fluidic line (105, 106); and
- a pair of tenth fluidic lines (111, 112) fluidically interposed between a respective first or second tank (A1, A2) and a respective suction section (71, 72) of a relative hydraulic pump (sRP1, sRP2);
said control unit (45, 45') being programmed to hold, in case of acquisition of said active operating state of said control member, said sixth and seventh control valves (FRAV, FLAV; RRAV, RLAV) in the respective sixth and seventh closed positions;
each sixth section (64, 65) being fluidically interposed between a respective fourth control valve (RREV, RLEV) and the corresponding second or fourth chamber (24, 26).

7. The motor vehicle according to claim 5 or 6, **characterized in that** said control unit (45) is programmed, in case of deactivated state of said first control member (7) and in case said parameters exceed respective predetermined threshold values, to:
- move at least one second control valve and at least one fourth control valve (USV1, USV2; FREV, FLEV) to the respective second and fourth closed position;
- move at least one corresponding fifth control valve (HSV1, HSV2) to the respective fifth open position;
- activate at least a corresponding one (sRP1) of said hydraulic pumps (sRP1, sRP2), so as to suck said operating liquid from at least one corresponding sixth fluidic line (81) and deliver said compressed operating liquid into at least one corresponding seventh fluidic line (91), along at least one respective segment (121);
said operating liquid recirculating, in use, along said second fluidic line (61), said third fluidic line (150), said first chamber (23) and said first fluidic line (50) associated with said first chamber (23).

8. The motor vehicle according to claim 7, **characterized in that** said first wheel (FR) is front right wheel and said second wheel (RR) is a rear right wheel.

9. The motor vehicle according to claim 6 or 7, **characterized in that** said control unit (45) is programmed, in case of deactivated state of said first control member (7) and in case said parameters exceed respective predetermined threshold values, to:
- move at least one second control valve (USV1) to said second closed position and a fourth control valve (FREV) to said fourth closed position;
- hold at least one fifth control valve (HSV1) in the respective fifth closed position and at least one third control valve (RLEV) in said third open position;
- activate at least one of said hydraulic pumps (sRP1), so as to suck said operating liquid from at least one sixth fluidic line (80) and deliver said compressed operating liquid into at least one seventh fluidic line (90), along at least one segment (120) of at least one first fluidic line (50) fluidically interposed between the respective second and third section (54, 56);
said operating liquid recirculating, in use, along said segment (120) of said first fluidic line (50), said eighth fluidic line (101), said tank (A1) and said tenth fluidic line (113) until it reaches said suction section (71) of a relative hydraulic pump (sRP1).

10. The motor vehicle according to claim 9, **characterized in that** said first wheel (FR) is front right wheel and said second wheel (RL) is a rear left wheel.

11. The motor vehicle according to any one of the claims from 6 to 10, **characterized in that** said control unit (45, 45') is programmed, in case of acquisition of an active operating state of said first control member (7), to:
- detect a condition of locking of at least one said first, second, third and fourth wheel (FR, RL, FL, RR);
- move at least one of said sixth control valves (FLAV, RRAV) to the respective sixth open positions, in case said locking condition is detected, so as to convey part of said operating liquid from the corresponding first, second, fourth or fifth fluidic line (50, 51, 60, 61) towards said first or second tank (A1, A2) and reduce the braking torque acting upon the relative first, second, third or fourth wheel (FR, RL, FL, RR).

12. The motor vehicle according to any one of the claims from 5 to 11, **characterized in that** said control unit (45, 45') is programmed to:
- receive, as an input, a first signal representative of the condition of correct or wrong behaviour of said motor vehicle (1);
- in case said first signal is representative of a correct behaviour of said motor vehicle (1) and in case said first control member (7) is deactivated, move said second and third control valve (USV1, USV2; FREV, FLEV) to the relative second and third closed position;
hold said first control valve (RLEV, RREV) in said fourth open position;
move said fifth control valve (HSV1, HSV2) to said fifth open position;
activate at least one of said hydraulic pumps (sRP1, sRP2) so as to suck said operating liquid from the relative suction section (71, 72) to the corresponding delivery section (73, 74); and
move said first control valve (150, 150') to the relative second position.

13. A braking control method for a motor vehicle (1); said motor vehicle (1) comprising:
- a first wheel (FR) and a second wheel (RL, RR);
- a first control member (7), which can be operated so as to cause a braking action exerted upon said first wheel (FR) and second wheel (RR; RL);
- a first braking device (11) and a second braking device (13, 12), which can be operated by means of said first control member (7) so as to exert a first braking torque upon said first wheel (FR) and a second braking torque upon said second wheel (RR, RL), respectively;
said first braking device (11) comprising:
- a first body (20);
- a first disc (21) angularly integral to the relative first wheel (FR) and housed inside said first body (20);
- at least one first pad (22) housed inside said first body (20) and movable between a neutral position, in which it is spaced apart from said first disc (21), and an operating position, in which it comes into contact with said first disc (21) so as to exert said first braking torque;
- a first chamber (23) delimited by said first body (21) and housing, on the inside, said at least one first pad (22);
said second braking device (13, 12) comprising:
- a second body (20);
- a second disc (21) angularly integral to the relative second wheel (RR, RL) and housed inside said second body (20);
- at least one second pad (22) housed inside said second body (20) and movable between a second neutral position, in which it is spaced apart from said second disc (21), and an operating position, in which it comes into contact with said second disc so as to exert said second braking torque;
- a second chamber (26, 24) delimited by said second body (20) and housing, on the inside, said at least one second pad (22);
said motor vehicle (1) comprising a braking control system (10, 10') operatively connected to said first control member (7);
said braking control system (10, 10') comprising, in turn:
- a first fluidic line (50) fluidically connected to said first control member (7) and to said first chamber (23) and designed to house said operating liquid;
- a second fluidic line (61, 60) fluidically connected, at least in an indirect manner, to said first control member (7) and to said second chamber (26, 24) and designed to house said operating liquid;
said method comprising the step of:
i) operating said first control member so as to raise the pressure of said operating liquid inside said first and second fluidic line (50, 51; 61, 60) and to move said first pad (22) from said first neutral position to said first operating position and said second pad (22) from said second neutral position to said second operating position;
**characterized in that** it comprises the further steps of:
ii) acquiring an operating state of said first control member (7) and a plurality of operating parameters of said motor vehicle (1);
iii) moving a first control valve between:
a first position, in which it fluidically connects a third fluidic line (150, 150') to said second fluidic line (61, 60) and fluidically isolates said second fluidic line (61, 60) from the relative second chamber (26, 24); and
a second position, in which it fluidically isolates said third fluidic line (150, 150') from said second fluidic line (61, 60) and fluidically connects said second fluidic line (61, 60) to the relative second chamber (26, 24);
iv) moving said first control valve (151, 151') from said second position to said first position for a limited amount of time, when said first control member (7) is in the deactivated state and when said parameters exceed respective predetermined threshold values.

## Patentansprüche

1. Kraftfahrzeug (1), umfassend:
- ein erstes Rad (FR) und ein zweites Rad (RL, RR);
- ein erstes Steuerelement (7), das betätigt werden kann, um eine Bremswirkung zu bewirken, die auf das erste Rad (FR) und das zweite Rad (RR; RL) ausgeübt wird;
- eine erste Bremsvorrichtung (11) und eine zweite Bremsvorrichtung (13, 12), die mittels des ersten Steuerelements (7) betätigt werden können, um jeweils ein erstes Bremsmoment auf das erste Rad (FR) und ein zweites Bremsmoment auf das zweite Rad (RR, RL) auszuüben;
wobei die erste Bremsvorrichtung (11) Folgendes umfasst:
- einen ersten Körper (20);
- eine erste Scheibe (21), die winkelmäßig integral mit dem relativen ersten Rad (FR) ist und in dem ersten Körper (20) untergebracht ist;
- mindestens einen ersten Belag (22), der innerhalb des ersten Körpers (20) untergebracht ist und zwischen einer Neutralposition, in der er von der ersten Scheibe (21) beabstandet ist, und einer Betriebsposition, in der er mit der ersten Scheibe (21) in Kontakt kommt, um das erste Bremsmoment auszuüben, bewegbar ist;
- eine erste Kammer (23), die durch den ersten Körper (21) begrenzt ist und auf der Innenseite den mindestens einen ersten Belag (22) aufnimmt;
wobei die zweite Bremsvorrichtung (13, 12) Folgendes umfasst:
- einen zweiten Körper (20);
- eine zweite Scheibe (21), die winkelmäßig integral mit dem relativen zweiten Rad (RR, RL) ist und in dem zweiten Körper (20) untergebracht ist;
- mindestens einen zweiten Belag (22), der innerhalb des zweiten Körpers (20) untergebracht ist und zwischen einer zweiten Neutralposition, in der er von der zweiten Scheibe (21) beabstandet ist, und einer Betriebsposition, in der er in Kontakt mit der zweiten Scheibe kommt, um das zweite Bremsmoment auszuüben, bewegbar ist;
- eine zweite Kammer (26, 24), die durch den zweiten Körper (20) begrenzt ist und auf der Innenseite den mindestens einen zweiten Belag (22) aufnimmt;
wobei das Kraftfahrzeug (1) ein Bremssteuersystem (10, 10') umfasst, das betriebswirksam mit dem ersten Steuerelement (7) verbunden ist;
wobei das Bremssteuersystem (10, 10') wiederum Folgendes umfasst:
- eine erste Fluidleitung (50), die fluidisch mit dem ersten Steuerelement (7) und der ersten Kammer (23) verbunden ist und zur Aufnahme der Betriebsflüssigkeit ausgelegt ist;
- eine zweite Fluidleitung (61, 60), die zumindest auf indirekte Weise mit dem ersten Steuerelement (7) und der zweiten Kammer (26, 24) fluidisch verbunden ist und zur Aufnahme der Betriebsflüssigkeit ausgelegt ist;
wobei das erste Steuerelement (7) so betätigt werden kann, dass es den Druck der Betriebsflüssigkeit innerhalb der ersten und zweiten Fluidleitung (50, 51; 61, 60) erhöht und den ersten Belag (22) von der ersten Neutralposition in die erste Betriebsposition und den zweiten Belag (22) von der zweiten Neutralposition in die zweite Betriebsposition bewegt;
**dadurch gekennzeichnet, dass** es umfasst:
- eine dritte Fluidleitung (150, 150'), die fluidisch mit der ersten Kammer (23) verbunden ist; und
- ein erstes Steuerventil (151, 151'), das selektiv bewegbar ist zwischen:
einer ersten Position, in der es die dritte Fluidleitung (150, 150') mit der zweiten Fluidleitung (61, 60) fluidisch verbindet und die zweite Fluidleitung (61, 60) von der zweiten Kammer (26, 24) fluidisch isoliert;
einer zweiten Position, in der es die dritte Fluidleitung (150, 150') von der zweiten Fluidleitung (61, 60) fluidisch isoliert und die zweite Fluidleitung (61, 60) mit der relativen zweiten Kammer (26, 24) fluidisch verbindet; und
- eine Steuereinheit (45, 45'), die programmiert ist, um einen aktiven oder deaktivierten Betriebszustand des ersten Steuerelements (7) und eine Vielzahl von Betriebsparametern des Kraftfahrzeugs (1) zu erfassen;
wobei die Steuereinheit (45, 45') ferner so programmiert ist, dass sie das erste Steuerventil (151, 151') für eine begrenzte Zeitspanne von der zweiten Position in die erste Position bewegt, wenn sich das erste Steuerelement (7) im deaktivierten Betriebszustand befindet und wenn die Parameter jeweilige vorbestimmte Schwellenwerte überschreiten.

2. Kraftfahrzeug nach Anspruch 1, **dadurch gekennzeichnet, dass** es umfasst:
- einen Motor (6), der so ausgelegt ist, dass er jeweilige Drehmomente auf das erste und zweite Rad (FR; RR, RL) anlegt; und
- ein zweites Steuerelement (8), das betätigt werden kann, um den Motor (6) einzustellen;
wobei die Parameter mindestens eine Fahrgeschwindigkeit des Kraftfahrzeugs (1) und ein Betriebsniveau des zweiten Steuerelements (8) umfassen;
wobei die Steuereinheit (45, 45') zu Folgendem programmiert ist:
- Bewegen des ersten Steuerventils (150, 150') von der zweiten Position in die erste Position, wenn die Fahrgeschwindigkeit einen ersten Schwellenwert überschreitet und das Betriebsniveau des ersten Steuerelements (8) einen zweiten Schwellenwert überschreitet; und
- Bewegen des zweiten Steuerventils (150, 150') am Ende der Zeitspanne zurück in die zweite Position.

3. Kraftfahrzeug nach Anspruch 1 oder 2, **dadurch gekennzeichnet, dass** zumindest der erste Körper (20) der ersten Bremsvorrichtung (11) eine erste und eine zweite Ablauföffnung (31) aufweist, die mit der ersten Kammer (23) fluidisch verbunden sind; wobei sich die dritte Fluidleitung (150, 150') von dem ersten Steuerventil (151, 151') zu der zweiten Ablauföffnung (31) erstreckt.

4. Kraftfahrzeug nach einem der vorhergehenden Ansprüche, **dadurch gekennzeichnet, dass** es ein Rückschlagventil (152, 152') umfasst, das entlang der dritten Fluidleitung (150, 150') zwischen dem ersten Steuerventil (151, 151') und der ersten Kammer (23) zwischengeschaltet und so konfiguriert ist, dass es verhindert, dass die Betriebsflüssigkeit aus der ersten Kammer (23) zum ersten Steuerventil (151, 151') zurückfließt.

5. Kraftfahrzeug nach einem der vorhergehenden Ansprüche, **dadurch gekennzeichnet, dass** das erste Steuerelement (7) wiederum eine erste und eine zweite Abgabe (MC1, MC2) umfasst;
wobei das Kraftfahrzeug (1) ferner Folgendes umfasst:
- ein drittes Rad (FL) und ein viertes Rad (RR);
- eine dritte Bremsvorrichtung (14), die eine dritte Kammer (25) umfasst und mittels des ersten Steuerelements (7) betätigt werden kann, um ein drittes Bremsmoment auf das dritte Rad (FL) auszuüben; und
- eine vierte Bremsvorrichtung (13), die eine vierte Kammer (26) umfasst und mittels des Steuerelements (7) betätigt werden kann, um ein viertes Bremsmoment auf das vierte Rad (RR) auszuüben;
wobei das Bremssteuersystem (10, 10') wiederum Folgendes umfasst:
- eine vierte Fluidleitung (51), die auf indirekte Weise mit dem ersten Steuerelement (7) und der dritten Kammer (25) fluidisch verbunden ist und zur Aufnahme der Betriebsflüssigkeit ausgelegt ist; und
- eine fünfte Fluidleitung (61), die zumindest auf indirekte Weise mit dem ersten Steuerelement (7) und der vierten Kammer (26) fluidisch verbunden ist und zur Aufnahme der Betriebsflüssigkeit ausgelegt ist;
wobei jede von der ersten und vierten Fluidleitung (50, 51) wiederum Folgendes umfasst:
- ein relatives zweites Steuerventil (USV1, USV2);
- ein relatives drittes Steuerventil (FREV, FLEV), das in einer Position angeordnet ist, die fluidisch zwischen dem relativen zweiten Steuerventil (USV1, USV2) und der relativen ersten Kammer (23) oder dritten Kammer (25) zwischengeschaltet ist;
- einen relativen ersten Abschnitt (52, 53), der fluidisch zwischen der relativen Abgabe (MC1, MC2) und dem relativen zweiten Steuerventil (USV1, USV2) zwischengeschaltet ist;
- einen relativen zweiten Abschnitt (54, 55) und einen relativen dritten Abschnitt (56, 57), die fluidisch zwischen dem relativen zweiten Steuerventil (USV1, USV2) und dem relativen dritten Steuerventil (FREV, FLEV) zwischengeschaltet sind;
- einen relativen vierten Abschnitt (58, 59), der fluidisch zwischen dem relativen dritten Steuerventil (FREV, FLEV) und der relativen ersten oder dritten Kammer (23, 25) zwischengeschaltet ist; und
- ein relatives Segment (120, 121), das fluidisch zwischen einem relativen dritten Abschnitt (56, 57) und einem entsprechenden vierten Abschnitt (58, 59) zwischengeschaltet ist;
wobei jeder dritte Abschnitt (56, 57) fluidisch zwischen einem jeweiligen zweiten Abschnitt (55, 56) und dem entsprechenden dritten Steuerventil (FREV, FLEV) zwischengeschaltet ist;
wobei sich die zweite Fluidleitung (60) zwischen der zweiten Kammer (24) und dem dritten Abschnitt (56) der ersten Fluidleitung (50) erstreckt oder die fünfte Fluidleitung (61) definiert;
wobei sich die fünfte Fluidleitung (61) zwischen der vierten Kammer (26) und dem dritten Abschnitt (57) der vierten Fluidleitung (51) erstreckt;
wobei jede von der zweiten und fünften Fluidleitung (60, 61) ferner Folgendes umfasst:
- ein relatives viertes Steuerventil (RLEV, RREV), das in einer Position angeordnet ist, die fluidisch zwischen dem relativen dritten Abschnitt (56, 57) einer relativen ersten und fünften Fluidleitung (50, 51) und der entsprechenden zweiten oder vierten Kammer (24, 26) zwischengeschaltet ist;
wobei jedes des zweiten und dritten Steuerventils (USV1, USV2; FREV, FLEV) selektiv bewegbar ist zwischen:
einer relativen zweiten und dritten offenen Position, in der sie ermöglichen, dass die Betriebsflüssigkeit entlang der entsprechenden ersten und vierten Fluidleitung (50, 51) fließt; und
einer relativen zweiten und dritten geschlossenen Position, in der sie verhindern, dass die Betriebsflüssigkeit entlang der entsprechenden ersten und vierten Fluidleitung (50, 51) fließt;
wobei jedes vierte Steuerventil (RLEV, RREV) selektiv zwischen einer relativen vierten offenen Position, in der es ermöglicht, dass die Betriebsflüssigkeit entlang der entsprechenden zweiten oder fünften Fluidleitung (60, 61) fließt, und einer vierten geschlossenen Position, in der es verhindert, dass die Betriebsflüssigkeit entlang der entsprechenden zweiten oder fünften Fluidleitung (60, 61) fließt, bewegbar ist;
wobei das Bremssteuersystem (10, 10') ferner Folgendes umfasst:
- ein Paar Hydraulikpumpen (sRP1, sRP2), die jeweils selektiv betätigt werden können, um die Betriebsflüssigkeit von einem jeweiligen fünften Ansaugabschnitt (71, 72) zu einem entsprechenden sechsten Abgabeabschnitt (73, 74) zu bewegen;
- ein Paar sechster Fluidleitungen (80, 81), die jeweils fluidisch zwischen einem jeweiligen zweiten Abschnitt (52, 53) einer jeweiligen ersten oder vierten Fluidleitung (50, 51) und dem jeweiligen fünften Ansaugabschnitt (71, 72) einer entsprechenden Hydraulikpumpe (sRP1, sRP2) zwischengeschaltet sind;
- ein Paar siebter Fluidleitungen (90, 91), die jeweils fluidisch zwischen dem relativen sechsten Abgabeabschnitt (73, 74) einer entsprechenden Hydraulikpumpe (sRP1, sRP2) und dem zweiten Abschnitt (54, 55) einer entsprechenden zwischen der ersten oder vierten Fluidleitung (50, 51) zwischengeschaltet sind;
- ein Paar fünfter Steuerventile (HSV1, HSV2), die entlang jeweiliger sechster Fluidleitungen (80, 81) zwischengeschaltet sind;
wobei jedes fünfte Steuerventil (HSV1, HSV2) selektiv bewegbar ist zwischen:
einer relativen fünften offenen Position, in der es ermöglicht, dass die Betriebsflüssigkeit entlang der entsprechenden sechsten Fluidleitung (80, 81) fließt; und
einer relativen fünften geschlossenen Position, in der es verhindert, dass die Betriebsflüssigkeit entlang der entsprechenden sechsten Fluidleitung (80, 81) fließt;
wobei die Steuereinheit (45, 45') so programmiert ist, dass sie im Falle der Erfassung eines aktiven Betriebszustands des ersten Steuerelements (7) Folgendes hält:
- das erste Steuerventil (151, 151') in der zweiten Position;
- das zweite, dritte und vierte Steuerventil (USV1, USV2; FREV, FLEV; RLEV, RREV) in der jeweiligen zweiten, dritten und vierten offenen Position;
- die fünften Steuerventile (HSV1, HSV2) in der jeweiligen fünften geschlossenen Position; und
- die Hydraulikpumpen (sRP1, sRP2) deaktiviert.

6. Kraftfahrzeug nach Anspruch 5, **dadurch gekennzeichnet, dass** das Bremssteuersystem (10, 10') ferner Folgendes umfasst:
- einen ersten Tank (A1), der der ersten und vierten Fluidleitung (50, 60) zugeordnet ist; und
- einen zweiten Tank (A2), der der zweiten und fünften Fluidleitung (51, 61) zugeordnet ist;
- ein Paar achter Fluidleitungen (101, 106), die fluidisch zwischen jeweiligen vierten Abschnitten (58, 59) der entsprechenden ersten und vierten Fluidleitung (50, 51) und dem jeweiligen ersten und zweiten Tank (A1, A2) zwischengeschaltet sind;
- ein Paar sechster Steuerventile (FRAV, FLAV), die entlang jeweiliger achter Fluidleitungen (101, 106) zwischengeschaltet sind und selektiv zwischen jeweiligen sechsten geschlossenen Positionen, in denen sie verhindern, dass die Betriebsflüssigkeit entlang jeweiliger achter Fluidleitungen (101, 106) fließt, und einer Vielzahl jeweiliger sechster offener Positionen bewegbar sind, in denen sie es jeweiligen Mengen an Betriebsflüssigkeit ermöglichen, entlang jeweiliger acht Fluidleitungen (101, 106) zu fließen;
- ein Paar neunter Fluidleitungen (100, 105), die fluidisch zwischen jeweiligen sechsten Abschnitten (64, 65) der entsprechenden zweiten oder fünften Fluidleitung (61, 6) und dem jeweiligen ersten und zweiten Tank (A, A2) zwischengeschaltet sind; wobei jeder sechste Abschnitt (64, 65) fluidisch zwischen dem vierten Steuerventil (RREV, RLEV) und der relativen zweiten und vierten Kammer (24, 26) zwischengeschaltet ist;
- ein Paar zehnter Proportionalsteuerventile (RLAV, RRAV), die entlang der neunten Fluidleitung (100, 105) zwischengeschaltet sind und jeweils selektiv zwischen einer relativen siebten geschlossenen Position, in der es verhindert, dass die Betriebsflüssigkeit entlang der entsprechenden neunten Fluidleitung (100, 105) fließt, und einer Vielzahl jeweiliger siebter offener Positionen bewegbar sind, in denen sie es jeweiligen Mengen an Betriebsflüssigkeit ermöglichen, entlang der entsprechenden neunten Fluidleitung (105, 106) zu fließen; und
- ein Paar zehnter Fluidleitungen (111, 112), die fluidisch zwischen einem jeweiligen ersten oder zweiten Tank (A1, A2) und einem jeweiligen Ansaugabschnitt (71, 72) einer relativen Hydraulikpumpe (sRP1, sRP2) zwischengeschaltet sind;
wobei die Steuereinheit (45, 45') so programmiert ist, dass sie im Falle der Erfassung des aktiven Betriebszustands des Steuerelements das sechste und siebte Steuerventil (FRAV, FLAV; RRAV, RLAV) in der jeweiligen sechsten und siebten geschlossenen Position hält;
wobei jeder sechste Abschnitt (64, 65) fluidisch zwischen einem jeweiligen vierten Steuerventil (RREV, RLEV) und der entsprechenden zweiten oder vierten Kammer (24, 26) zwischengeschaltet ist.

7. Kraftfahrzeug nach Anspruch 5 oder 6, **dadurch gekennzeichnet, dass** die Steuereinheit (45) im Falle eines deaktivierten Zustands des ersten Steuerelements (7) und im Falle, dass die Parameter jeweilige vorbestimmte Schwellenwerte überschreiten, zu Folgendem programmiert ist:
- Bewegen mindestens eines zweiten Steuerventils und mindestens eines vierten Steuerventils (USV1, USV2; FREV, FLEV) in die jeweilige zweite und vierte geschlossene Position;
- Bewegen mindestens eines entsprechenden fünften Steuerventils (HSV1, HSV2) in die jeweilige fünfte offene Position;
- Aktivieren mindestens einer entsprechenden (sRP1) zwischen den Hydraulikpumpen (sRP1, sRP2), um die Betriebsflüssigkeit aus mindestens einer entsprechenden sechsten Fluidleitung (81) zu saugen und die komprimierte Betriebsflüssigkeit in mindestens eine entsprechende siebte Fluidleitung (91) entlang mindestens eines jeweiligen Segments (121) abzugeben;
wobei die Betriebsflüssigkeit im Gebrauch entlang der zweiten Fluidleitung (61), der dritten Fluidleitung (150), der ersten Kammer (23) und der ersten Fluidleitung (50), die der ersten Kammer (23) zugeordnet ist, rezirkuliert.

8. Kraftfahrzeug nach Anspruch 7, **dadurch gekennzeichnet, dass** das erste Rad (FR) ein rechtes Vorderrad und das zweite Rad (RR) ein rechtes Hinterrad ist.

9. Kraftfahrzeug nach Anspruch 6 oder 7, **dadurch gekennzeichnet, dass** die Steuereinheit (45) im Falle eines deaktivierten Zustands des ersten Steuerelements (7) und im Falle, dass die Parameter jeweilige vorbestimmte Schwellenwerte überschreiten, zu Folgendem programmiert ist:
- Bewegen mindestens eines zweiten Steuerventils (USV1) in die zweite geschlossene Position und eines vierten Steuerventils (FREV) in die vierte geschlossene Position;
- Halten mindestens eines fünften Steuerventils (HSV1) in der jeweiligen fünften geschlossenen Position und mindestens eines dritten Steuerventils (RLEV) in der dritten offenen Position;
- Aktivieren mindestens einer der Hydraulikpumpen (sRP1), um die Betriebsflüssigkeit aus mindestens einer sechsten Fluidleitung (80) zu saugen und die komprimierte Betriebsflüssigkeit in mindestens eine siebte Fluidleitung (90) entlang mindestens eines Segments (120) mindestens einer ersten Fluidleitung (50) abzugeben, die fluidisch zwischen dem jeweiligen zweiten und dritten Abschnitt (54, 56) zwischengeschaltet ist;
wobei die Betriebsflüssigkeit im Gebrauch entlang des Segments (120) der ersten Fluidleitung (50), der achten Fluidleitung (101), des Tanks (A1) und der zehnten Fluidleitung (113) rezirkuliert, bis sie den Ansaugabschnitt (71) einer relativen Hydraulikpumpe (sRP1) erreicht.

10. Kraftfahrzeug nach Anspruch 9, **dadurch gekennzeichnet, dass** das erste Rad (FR) ein rechtes Vorderrad und das zweite Rad (RL) ein linkes Hinterrad ist.

11. Kraftfahrzeug nach einem der Ansprüche 6 bis 10, **dadurch gekennzeichnet, dass** die Steuereinheit (45, 45') im Falle der Erfassung eines aktiven Betriebszustands des ersten Steuerelements (7) zu Folgendem programmiert ist:
- Detektieren einer Verriegelungsbedingung von mindestens einem der ersten, zweiten, dritten und vierten Räder (FR, RL, FL, RR);
- Bewegen mindestens eines der sechsten Steuerventile (FLAV, RRAV) in die jeweilige sechste offene Position, falls die Verriegelungsbedingung detektiert wird, um einen Teil der Betriebsflüssigkeit von der entsprechenden ersten, zweiten, vierten oder fünften Fluidleitung (50, 51, 60, 61) in Richtung des ersten oder zweiten Tanks (A1, A2) zu befördern und das Bremsmoment, das auf das relative erste, zweite, dritte oder vierte Rad (FR, RL, FL, RR) wirkt, zu reduzieren.

12. Kraftfahrzeug nach einem der Ansprüche 5 bis 11, **dadurch gekennzeichnet, dass** die Steuereinheit (45, 45') zu Folgendem programmiert ist:
- Empfangen eines ersten Signals als Eingabe, das für die Bedingung des richtigen oder falschen Verhaltens des Kraftfahrzeugs (1) repräsentativ ist;
- falls das erste Signal für ein korrektes Verhalten des Kraftfahrzeugs (1) repräsentativ ist und falls das erste Steuerelement (7) deaktiviert ist, Bewegen des zweiten und dritten Steuerventils (USV1, USV2; FREV, FLEV) in die relative zweite und dritte geschlossene Position;
Halten des ersten Steuerventils (RLEV, RREV) in der vierten offenen Position;
Bewegen des fünften Steuerventils (HSV1, HSV2) in die fünfte offene Position;
Aktivieren mindestens einer der Hydraulikpumpen (sRP1, sRP2), um die Betriebsflüssigkeit aus dem relativen Ansaugabschnitt (71, 72) zu dem entsprechenden Abgabeabschnitt (73, 74) zu saugen; und
Bewegen des ersten Steuerventils (150, 150') in die relative zweite Position.

13. Bremssteuerverfahren für ein Kraftfahrzeug (1), wobei das Kraftfahrzeug (1) Folgendes umfasst:
- ein erstes Rad (FR) und ein zweites Rad (RL, RR) ;
- ein erstes Steuerelement (7), das betätigt werden kann, um eine Bremswirkung zu bewirken, die auf das erste Rad (FR) und das zweite Rad (RR; RL) ausgeübt wird;
- eine erste Bremsvorrichtung (11) und eine zweite Bremsvorrichtung (13, 12), die mittels des ersten Steuerelements (7) betätigt werden können, um jeweils ein erstes Bremsmoment auf das erste Rad (FR) und ein zweites Bremsmoment auf das zweite Rad (RR, RL) auszuüben;
wobei die erste Bremsvorrichtung (11) Folgendes umfasst:
- einen ersten Körper (20);
- eine erste Scheibe (21), die winkelmäßig integral mit dem relativen ersten Rad (FR) ist und in dem ersten Körper (20) untergebracht ist;
- mindestens einen ersten Belag (22), der innerhalb des ersten Körpers (20) untergebracht ist und zwischen einer Neutralposition, in der er von der ersten Scheibe (21) beabstandet ist, und einer Betriebsposition, in der er mit der ersten Scheibe (21) in Kontakt kommt, um das erste Bremsmoment auszuüben, bewegbar ist;
- eine erste Kammer (23), die durch den ersten Körper (21) begrenzt ist und auf der Innenseite den mindestens einen ersten Belag (22) aufnimmt;
wobei die zweite Bremsvorrichtung (13, 12) Folgendes umfasst:
- einen zweiten Körper (20);
- eine zweite Scheibe (21), die winkelmäßig integral mit dem relativen zweiten Rad (RR, RL) ist und in dem zweiten Körper (20) untergebracht ist;
- mindestens einen zweiten Belag (22), der innerhalb des zweiten Körpers (20) untergebracht ist und zwischen einer zweiten Neutralposition, in der er von der zweiten Scheibe (21) beabstandet ist, und einer Betriebsposition, in der er in Kontakt mit der zweiten Scheibe kommt, um das zweite Bremsmoment auszuüben, bewegbar ist;
- eine zweite Kammer (26, 24), die durch den zweiten Körper (20) begrenzt ist und auf der Innenseite den mindestens einen zweiten Belag (22) aufnimmt;
wobei das Kraftfahrzeug (1) ein Bremssteuersystem (10, 10') umfasst, das betriebswirksam mit dem ersten Steuerelement (7) verbunden ist;
wobei das Bremssteuersystem (10, 10') wiederum Folgendes umfasst:
- eine erste Fluidleitung (50), die fluidisch mit dem ersten Steuerelement (7) und der ersten Kammer (23) verbunden ist und zur Aufnahme der Betriebsflüssigkeit ausgelegt ist;
- eine zweite Fluidleitung (61, 60), die zumindest auf indirekte Weise mit dem ersten Steuerelement (7) und der zweiten Kammer (26, 24) fluidisch verbunden ist und zur Aufnahme der Betriebsflüssigkeit ausgelegt ist;
wobei das Verfahren den Schritt umfasst:
i) Betätigen des ersten Steuerelements, um den Druck der Betriebsflüssigkeit innerhalb der ersten und zweiten Fluidleitung (50, 51; 61, 60) zu erhöhen und den ersten Belag (22) von der ersten Neutralposition in die erste Betriebsposition und den zweiten Belag (22) von der zweiten Neutralposition in die zweite Betriebsposition zu bewegen;
**dadurch gekennzeichnet, dass** es die folgenden weiteren Schritte umfasst:
ii) Erfassen eines Betriebszustands des ersten Steuerelements (7) und einer Vielzahl von Betriebsparametern des Kraftfahrzeugs (1);
iii) Bewegen eines ersten Steuerventils zwischen:
einer ersten Position, in der sie eine dritte Fluidleitung (150, 150') mit der zweiten Fluidleitung (61, 60) fluidisch verbindet und die zweite Fluidleitung (61, 60) von der relativen zweiten Kammer (26, 24) fluidisch isoliert; und
einer zweiten Position, in der sie die dritte Fluidleitung (150, 150') von der zweiten Fluidleitung (61, 60) fluidisch isoliert und die zweite Fluidleitung (61, 60) mit der relativen zweiten Kammer (26, 24) fluidisch verbindet;
iv) Bewegen des ersten Steuerventils (151, 151') für eine begrenzte Zeitspanne von der zweiten Position in die erste Position, wenn sich das erste Steuerelement (7) im deaktivierten Betriebszustand befindet und wenn die Parameter jeweilige vorbestimmte Schwellenwerte überschreiten.

## Revendications

1. Véhicule à moteur (1) comprenant :
- une première roue (FR) et une deuxième roue (RL, RR) ;
- un premier organe de commande (7), qui peut être actionné de manière à provoquer une action de freinage exercée sur ladite première roue (FR) et ladite deuxième roue (RR ; RL) ;
- un premier dispositif de freinage (11) et un deuxième dispositif de freinage (13, 12), qui peuvent être actionnés au moyen dudit premier organe de commande (7) de manière à exercer un premier couple de freinage sur ladite première roue (FR) et un deuxième couple de freinage sur ladite deuxième roue (RR, RL), respectivement ;
ledit premier dispositif de freinage (11) comprenant :
- un premier corps (20) ;
- un premier disque (21) angulairement solidaire de la première roue relative (FR) et logé à l'intérieur dudit premier corps (20) ;
- au moins un premier patin (22) logé à l'intérieur dudit premier corps (20) et mobile entre une position neutre, dans laquelle il est écarté dudit premier disque (21), et une position de fonctionnement, dans laquelle il entre en contact avec ledit premier disque (21) afin d'exercer ledit premier couple de freinage ;
- une première chambre (23) délimitée par ledit premier corps (21) et logeant, à l'intérieur, ledit au moins un premier patin (22) ;
ledit deuxième dispositif de freinage (13, 12) comprenant :
- un deuxième corps (20) ;
- un deuxième disque (21) angulairement solidaire de la deuxième roue relative (RR, RL) et logé à l'intérieur dudit deuxième corps (20) ;
- au moins un deuxième patin (22) logé à l'intérieur dudit deuxième corps (20) et mobile entre une deuxième position neutre, dans laquelle il est écarté dudit deuxième disque (21), et une position de fonctionnement, dans laquelle il entre en contact avec ledit deuxième disque afin d'exercer ledit deuxième couple de freinage ;
- une deuxième chambre (26, 24) délimitée par ledit deuxième corps (20) et logeant, à l'intérieur, ledit au moins un deuxième patin (22) ;
ledit véhicule à moteur (1) comprenant un système de commande de freinage (10, 10') relié de manière opérationnelle audit premier organe de commande (7) ;
ledit système de commande de freinage (10, 10') comprenant, à son tour :
- une première conduite fluidique (50) reliée de manière fluidique audit premier organe de commande (7) et à ladite première chambre (23) et conçue pour contenir ledit liquide de fonctionnement ;
- une deuxième conduite fluidique (61, 60) reliée de manière fluidique, au moins d'une manière indirecte, audit premier organe de commande (7) et à ladite deuxième chambre (26, 24) et destinée à contenir ledit liquide de fonctionnement ;
ledit premier élément de commande (7) est apte à être actionné de manière à augmenter la pression dudit liquide de fonctionnement à l'intérieur desdites première et deuxième conduites fluidiques (50, 51 ; 61, 60) et à déplacer ledit premier patin (22) de ladite première position neutre à ladite première position de fonctionnement et ledit deuxième patin (22) de ladite deuxième position neutre à ladite deuxième position de fonctionnement ;
**caractérisée en ce qu'**il comprend :
- une troisième conduite fluidique (150, 150') reliée de manière fluidique à ladite première chambre (23) ; et
- une première vanne de commande (151, 151') mobile sélectivement entre :
une première position, dans laquelle elle relie de manière fluidique ladite troisième conduite fluidique (150, 150') à ladite deuxième conduite fluidique (61, 60) et isole de manière fluidique ladite deuxième conduite fluidique (61, 60) de ladite deuxième chambre (26, 24) ;
une deuxième position, dans laquelle elle isole de manière fluidique ladite troisième conduite fluidique (150, 150') de ladite deuxième conduite fluidique (61, 60) et relie de manière fluidique ladite deuxième conduite fluidique (61, 60) à la deuxième chambre relative (26, 24) ; et
- une unité de commande (45, 45') programmée pour acquérir un état de fonctionnement actif ou désactivé dudit premier organe de commande (7) et une pluralité de paramètres de fonctionnement dudit véhicule à moteur (1) ;
ladite unité de commande (45, 45') étant en outre programmée pour déplacer ladite première vanne de commande (151, 151') de ladite deuxième position à ladite première position pendant une durée limitée, lorsque ledit premier organe de commande (7) est dans l'état de fonctionnement désactivé et lorsque lesdits paramètres dépassent des valeurs de seuil prédéterminées respectives.

2. Véhicule à moteur selon la revendication 1, **caractérisé en ce qu'**il comprend :
- un moteur (6) conçu pour appliquer des couples respectifs à ladite première et à ladite deuxième roue (FR ; RR, RL) ; et
- un deuxième organe de commande (8), qui peut être actionné de manière à régler ledit moteur (6) ;
lesdits paramètres comprenant au moins une vitesse de conduite dudit véhicule à moteur (1) et un niveau de fonctionnement dudit deuxième organe de commande (8) ;
ladite unité de commande (45, 45') étant programmée pour :
- déplacer ladite première vanne de commande (150, 150') de ladite deuxième position à ladite première position, lorsque ladite vitesse de conduite dépasse une première valeur de seuil et que ledit niveau de fonctionnement dudit premier organe de commande (8) dépasse une deuxième valeur de seuil ; et
- ramener ladite deuxième vanne de commande (150, 150') dans ladite deuxième position à la fin de ladite durée.

3. Véhicule à moteur selon la revendication 1 ou 2, **caractérisé en ce qu'**au moins ledit premier corps (20) dudit premier dispositif de freinage (11) comprend une première et une deuxième ouverture de vidange (31) reliées de manière fluidique à ladite première chambre (23) ; ladite troisième conduite fluidique (150, 150') s'étendant de ladite première vanne de commande (151, 151') à ladite deuxième ouverture de vidange (31).

4. Véhicule à moteur selon l'une quelconque des revendications précédentes, **caractérisé en ce qu'**il comprend un clapet anti-retour (152, 152') interposé le long de ladite troisième conduite fluidique (150, 150') entre ladite première vanne de commande (151, 151') et ladite première chambre (23) et configuré de manière à empêcher ledit liquide de fonctionnement de retourner de ladite première chambre (23) vers ladite première vanne de commande (151, 151').

5. Véhicule à moteur selon l'une quelconque des revendications précédentes, **caractérisé en ce que** ledit premier organe de commande (7) comprend, à son tour, une première et une deuxième distribution (MC1, MC2) ;
ledit véhicule à moteur (1) comprenant en outre :
- une troisième roue (FL) et une quatrième roue (RR) ;
- un troisième dispositif de freinage (14) comprenant une troisième chambre (25) et apte à être actionné au moyen dudit premier organe de commande (7) de manière à exercer un troisième couple de freinage sur ladite troisième roue (FL) ; et
- un quatrième dispositif de freinage (13) comprenant une quatrième chambre (26) et apte à être actionné au moyen dudit organe de commande (7) de manière à exercer un quatrième couple de freinage sur ladite quatrième roue (RR) ;
ledit système de commande de freinage (10, 10') comprenant, à son tour :
- une quatrième conduite fluidique (51) reliée de manière fluidique, d'une manière indirecte, audit premier organe de commande (7) et à ladite troisième chambre (25) et conçue pour contenir ledit liquide de fonctionnement ; et
- une cinquième conduite fluidique (61) reliée de manière fluidique, au moins d'une manière indirecte, audit premier organe de commande (7) et à ladite quatrième chambre (26) et destinée à contenir ledit liquide de fonctionnement ;
chacune desdites première et quatrième conduites fluidiques (50, 51) comprenant, à son tour :
- une deuxième vanne de commande relative (USV1, USV2) ;
- une troisième vanne de commande relative (FREV, FLEV) disposée dans une position interposée de manière fluidique entre la deuxième vanne de commande relative (USV1, USV2) et la première chambre relative (23) ou la troisième chambre relative (25) ;
- une première section relative (52, 53) interposée de manière fluidique entre la distribution relative (MC1, MC2) et la deuxième vanne de commande relative (USV1, USV2) ;
- une deuxième section relative (54, 55) et une troisième section relative (56, 57) interposées de manière fluidique entre la deuxième vanne de commande relative (USV1, USV2) et la troisième vanne de commande relative (FREV, FLEV) ;
- une quatrième section relative (58, 59) interposée de manière fluidique entre la troisième vanne de commande relative (FREV, FLEV) et la première ou troisième chambre relative (23, 25) ; et
- un segment relatif (120, 121) interposé de manière fluidique entre une troisième section relative (56, 57) et une quatrième section correspondante (58, 59) ;
chaque troisième section (56, 57) étant interposée de manière fluidique entre une deuxième section relative (55, 56) et la troisième vanne de commande correspondante (FREV, FLEV) ;
ladite deuxième conduite fluidique (60) s'étendant entre ladite deuxième chambre (24) et ladite troisième section (56) de ladite première conduite fluidique (50) ou définissant ladite cinquième conduite fluidique (61) ;
ladite cinquième conduite fluidique (61) s'étendant entre ladite quatrième chambre (26) et ladite troisième section (57) de ladite quatrième conduite fluidique (51) ;
chacune desdites deuxième et cinquième conduites fluidiques (60, 61) comprenant en outre :
- une quatrième vanne de contrôle relative (RLEV, RREV) disposée dans une position interposée de manière fluidique entre la troisième section relative (56, 57) d'une première et d'une cinquième conduite fluidique relative (50, 51) et la deuxième ou la quatrième chambre correspondante (24, 26) ;
chacune desdites deuxième et troisième vannes de commande (USV1, USV2 ; FREV, FLEV) pouvant être déplacée sélectivement entre :
une deuxième et une troisième positions ouvertes relatives, dans lesquelles elles permettent à ce liquide de fonctionnement de s'écouler le long de la première et de la quatrième conduite fluidique correspondante (50, 51) ; et
une deuxième et une troisième positions fermées relatives, dans lesquelles elles empêchent ledit liquide de fonctionnement de s'écouler le long de la première et de la quatrième conduite fluidique correspondante (50, 51) ;
chaque quatrième vanne de commande (RLEV, RREV) pouvant être déplacée sélectivement entre une quatrième position ouverte relative, dans laquelle elle permet audit liquide de fonctionnement de s'écouler le long de la deuxième ou de la cinquième conduite fluidique correspondante (60, 61), et une quatrième position fermée, dans laquelle elle empêche ledit liquide de fonctionnement de s'écouler le long de la deuxième ou de la cinquième conduite fluidique correspondante (60, 61) ;
ledit système de commande de freinage (10, 10') comprenant en outre :
- une paire de pompes hydrauliques (sRP1, sRP2), chacune apte à être actionnée sélectivement de manière à déplacer ledit liquide de fonctionnement d'une cinquième section d'aspiration respective (71, 72) à une sixième section de refoulement correspondante (73, 74) ;
- une paire de sixièmes conduites fluidiques (80, 81), chacune interposée de manière fluidique entre une deuxième section respective (52, 53) d'une première ou quatrième conduite fluidique respective (50, 51) et la cinquième section d'aspiration respective (71, 72) d'une pompe hydraulique correspondante (sRP1, sRP2) ;
- une paire de septièmes conduites fluidiques (90, 91), chacune interposée de manière fluidique entre la sixième section de refoulement (73, 74) d'une pompe hydraulique correspondante (sRP1, sRP2) et ladite deuxième section (54, 55) de l'une correspondante parmi ladite première ou ladite quatrième conduite fluidique (50, 51) ;
- une paire de cinquièmes vannes de commande (HSV1, HSV2) interposées le long de sixièmes conduites fluidiques respectives (80, 81) ;
chaque cinquième vanne de commande (HSV1, HSV2) pouvant être déplacée sélectivement entre :
une cinquième position ouverte relative, dans laquelle elle permet audit liquide de fonctionnement de s'écouler le long de la sixième conduite fluidique correspondante (80, 81) ; et
une cinquième position fermée relative, dans laquelle elle empêche ledit liquide de fonctionnement de s'écouler le long de la sixième conduite fluidique correspondante (80, 81) ;
ladite unité de commande (45, 45') étant programmée pour maintenir, en cas d'acquisition d'un état de fonctionnement actif dudit premier organe de commande (7) en place :
- ladite première vanne de commande (151, 151') dans ladite deuxième position ;
- lesdites deuxième, troisième et quatrième vannes de commande (USV1, USV2 ; FREV, FLEV ; RLEV, RREV) dans la deuxième, troisième et quatrième position ouverte respective ;
- lesdites cinquièmes vannes de commande (HSV1, HSV2) dans les cinquièmes positions fermées respectives ; et
- lesdites pompes hydrauliques (sRP1, sRP2) désactivées.

6. Véhicule à moteur selon la revendication 5, **caractérisé en ce que** ledit système de commande de freinage (10, 10') comprend en outre :
- un premier réservoir (A1) associé auxdites première et quatrième conduites fluidiques (50, 60) ;
et
- un deuxième réservoir (A2) associé auxdites deuxième et cinquième conduites fluidiques (51, 61) ;
- une paire de huitièmes conduites fluidiques (101, 106) interposées de manière fluidique entre les quatrièmes sections respectives (58, 59) des première et quatrième conduites fluidiques correspondantes (50, 51) et lesdits premier et deuxième réservoirs respectifs (A1, A2) ;
- une paire de sixièmes vannes de commande (FRAV, FLAV) interposées le long de huitièmes conduites fluidiques respectives (101, 106) et pouvant être déplacées sélectivement entre des sixièmes positions fermées respectives, dans lesquelles elles empêchent ledit liquide de fonctionnement de s'écouler le long de huitièmes conduites fluidiques respectives (101, 106), et une pluralité de sixièmes positions ouvertes respectives, dans lesquelles elles permettent à des quantités respectives de liquide de fonctionnement de s'écouler le long de huit conduites fluidiques respectives (101, 106) ;
- une paire de neuvièmes conduites fluidiques (100, 105) interposées de manière fluidique entre des sixièmes sections respectives (64, 65) desdites deuxième ou cinquième conduites fluidiques correspondantes (61, 6) et lesdits premier et deuxième réservoirs respectifs (A, A2) ; chaque sixième section (64, 65) étant interposée de manière fluidique entre ladite quatrième vanne de commande (RREV, RLEV) et les deuxième et quatrième chambres relatives (24, 26) ;
- une paire de dixièmes vannes de commande proportionnelle (RLAV, RRAV) interposées le long desdites neuvièmes conduites fluidiques (100, 105) et chacune pouvant être déplacée sélectivement entre une septième position fermée relative, dans laquelle elle empêche ledit liquide de fonctionnement de s'écouler le long de la neuvième conduite fluidique correspondante (100, 105), et une pluralité de septièmes positions ouvertes respectives, dans lesquelles elles permettent à des quantités respectives de liquide de fonctionnement de s'écouler le long de la neuvième conduite fluidique correspondante (105, 106) ; et
- une paire de dixièmes conduites fluidiques (111, 112) interposées de manière fluidique entre un premier ou un deuxième réservoir respectif (A1, A2) et une section d'aspiration respective (71, 72) d'une pompe hydraulique relative (sRP1, sRP2) ;
ladite unité de commande (45, 45') étant programmée pour maintenir, en cas d'acquisition dudit état de fonctionnement actif dudit organe de commande, lesdites sixième et septième vannes de commande (FRAV, FLAV ; RRAV, RLAV) dans les sixième et septième positions fermées respectives ;
chaque sixième section (64, 65) est interposée de manière fluidique entre une quatrième vanne de contrôle respective (RREV, RLEV) et la deuxième ou quatrième chambre correspondante (24, 26).

7. Véhicule à moteur selon la revendication 5 ou 6, **caractérisé en ce que** ladite unité de commande (45) est programmée, en cas d'état désactivé dudit premier organe de commande (7) et dans le cas où lesdits paramètres dépassent des valeurs de seuil prédéterminées respectives, pour :
- déplacer au moins une deuxième vanne de commande et au moins une quatrième vanne de commande (USV1, USV2 ; FREV, FLEV) dans les deuxième et quatrième positions fermées respectives ;
- déplacer au moins une cinquième vanne de commande correspondante (HSV1, HSV2) dans la cinquième position ouverte respective ;
- activer au moins l'une correspondante (sRP1) desdites pompes hydrauliques (sRP1, sRP2), de manière à aspirer ledit liquide de fonctionnement à partir d'au moins une sixième conduite fluidique correspondante (81) et à distribuer ledit liquide de fonctionnement comprimé dans au moins une septième conduite fluidique correspondante (91), le long d'au moins un segment respectif (121) ;
ledit liquide de fonctionnement étant en recirculation, en cours d'utilisation, le long de ladite deuxième conduite fluidique (61), de ladite troisième conduite fluidique (150), de ladite première chambre (23) et de ladite première conduite fluidique (50) associée à ladite première chambre (23)

8. Véhicule à moteur selon la revendication 7, **caractérisé en ce que** ladite première roue (FR) est une roue avant droite et ladite deuxième roue (RR) est une roue arrière droite.

9. Véhicule à moteur selon la revendication 6 ou 7, **caractérisé en ce que** ladite unité de commande (45) est programmée, en cas d'état désactivé dudit premier organe de commande (7) et dans le cas où lesdits paramètres dépassent des valeurs de seuil prédéterminées respectives, pour :
- déplacer au moins une deuxième vanne de commande (USV1) dans ladite deuxième position fermée et une quatrième vanne de commande (FREV) dans ladite quatrième position fermée ;
- maintenir au moins une cinquième vanne de commande (HSV1) dans la cinquième position fermée respective et au moins une troisième vanne de commande (RLEV) dans ladite troisième position ouverte ;
- activer au moins une desdites pompes hydrauliques (sRP1), de manière à aspirer ledit liquide de fonctionnement à partir d'au moins une sixième conduite fluidique (80) et de distribuer ledit liquide de fonctionnement comprimé dans au moins une septième conduite fluidique (90), le long d'au moins un segment (120) d'au moins une première conduite fluidique (50) interposée de manière fluidique entre les deuxième et troisième sections (54, 56) respectives ;
ledit liquide de fonctionnement étant en recirculation, en cours d'utilisation, le long dudit segment (120) de ladite première conduite fluidique (50), de ladite huitième conduite fluidique (101), dudit réservoir (A1) et de ladite dixième conduite fluidique (113) jusqu'à ce qu'il atteigne ladite section d'aspiration (71) d'une pompe hydraulique relative (sRP1).

10. Véhicule à moteur selon la revendication 9, **caractérisé en ce que** ladite première roue (FR) est une roue avant droite et ladite deuxième roue (RL) est une roue arrière gauche.

11. Véhicule à moteur selon l'une quelconque des revendications de 6 à 10, **caractérisé en ce que** ladite unité de commande (45, 45') est programmée, en cas d'acquisition d'un état de fonctionnement actif dudit premier organe de commande (7), pour :
- détecter un état de blocage d'au moins une desdites première, deuxième, troisième et quatrième roues (FR, RL, FL, RR) ;
- déplacer au moins l'une desdites sixièmes vannes de commande (FLAV, RRAV) vers les sixièmes positions ouvertes respectives, au cas où ladite condition de blocage est détectée, de manière à acheminer une partie dudit liquide de fonctionnement de la première, deuxième, quatrième ou cinquième conduite fluidique correspondante (50, 51, 60, 61) vers ledit premier ou deuxième réservoir (A1, A2) et à réduire le couple de freinage agissant sur la première, deuxième, troisième ou quatrième roue relative (FR, RL, FL, RR).

12. Véhicule à moteur selon l'une quelconque des revendications de 5 à 11, **caractérisé en ce que** ladite unité de commande (45, 45') est programmée pour :
- recevoir, en tant qu'entrée, un premier signal représentatif de la condition de comportement correct ou incorrect dudit véhicule à moteur (1) ;
- si ledit premier signal est représentatif d'un comportement correct dudit véhicule à moteur (1) et si ledit premier élément de commande (7) est désactivé, déplacer lesdites deuxième et troisième vannes de commande (USV1, USV2 ; FREV, FLEV) vers les deuxième et troisième positions fermées relatives ;
maintenir ladite première vanne de commande (RLEV, RREV) dans ladite quatrième position ouverte ;
déplacer ladite cinquième vanne de commande (HSV1, HSV2) dans ladite cinquième position ouverte ;
activer au moins une desdites pompes hydrauliques (sRP1, sRP2) de manière à aspirer ledit liquide de fonctionnement de la section d'aspiration relative (71, 72) à la section de distribution correspondante (73, 74) ; et
déplacer ladite première vanne de commande (150, 150') dans la deuxième position relative.

13. Procédé de commande de freinage pour un véhicule à moteur (1) ; ledit véhicule à moteur (1) comprenant :
- une première roue (FR) et une deuxième roue (RL, RR) ;
- un premier organe de commande (7), qui peut être actionné de manière à provoquer une action de freinage exercée sur ladite première roue (FR) et ladite deuxième roue (RR ; RL) ;
- un premier dispositif de freinage (11) et un deuxième dispositif de freinage (13, 12), qui peuvent être actionnés au moyen dudit premier organe de commande (7) de manière à exercer un premier couple de freinage sur ladite première roue (FR) et un deuxième couple de freinage sur ladite deuxième roue (RR, RL), respectivement ;
ledit premier dispositif de freinage (11) comprenant :
- un premier corps (20) ;
- un premier disque (21) angulairement solidaire de la première roue relative (FR) et logé à l'intérieur dudit premier corps (20) ;
- au moins un premier patin (22) logé à l'intérieur dudit premier corps (20) et mobile entre une position neutre, dans laquelle il est écarté dudit premier disque (21), et une position de fonctionnement, dans laquelle il entre en contact avec ledit premier disque (21) afin d'exercer ledit premier couple de freinage ;
- une première chambre (23) délimitée par ledit premier corps (21) et logeant, à l'intérieur, ledit au moins un premier patin (22) ;
ledit deuxième dispositif de freinage (13, 12) comprenant :
- un deuxième corps (20) ;
- un deuxième disque (21) angulairement solidaire de la deuxième roue relative (RR, RL) et logé à l'intérieur dudit deuxième corps (20) ;
- au moins un deuxième patin (22) logé à l'intérieur dudit deuxième corps (20) et mobile entre une deuxième position neutre, dans laquelle il est écarté dudit deuxième disque (21), et une position de fonctionnement, dans laquelle il entre en contact avec ledit deuxième disque afin d'exercer ledit deuxième couple de freinage ;
- une deuxième chambre (26, 24) délimitée par ledit deuxième corps (20) et logeant, à l'intérieur, ledit au moins un deuxième patin (22) ;
ledit véhicule à moteur (1) comprenant un système de commande de freinage (10, 10') relié de manière opérationnelle audit premier organe de commande (7) ;
ledit système de commande de freinage (10, 10') comprenant, à son tour :
- une première conduite fluidique (50) reliée de manière fluidique audit premier organe de commande (7) et à ladite première chambre (23) et conçue pour contenir ledit liquide de fonctionnement ;
- une deuxième conduite fluidique (61, 60) reliée de manière fluidique, au moins d'une manière indirecte, audit premier organe de commande (7) et à ladite deuxième chambre (26, 24) et destinée à contenir ledit liquide de fonctionnement ;
ledit procédé comprenant l'étape suivante :
i) l'actionnement dudit premier élément de commande de manière à augmenter la pression dudit liquide de fonctionnement à l'intérieur desdites première et deuxième conduites fluidiques (50, 51 ; 61, 60) et à déplacer ledit premier patin (22) de ladite première position neutre à ladite première position de fonctionnement et ledit deuxième patin (22) de ladite deuxième position neutre à ladite deuxième position de fonctionnement ;
caractérisé en cet qu'il comprend les autres étapes suivantes :
ii) l'acquisition d'un état de fonctionnement dudit premier organe de commande (7) et d'une pluralité de paramètres de fonctionnement dudit véhicule à moteur (1) ;
iii) le déplacement d'une première vanne de commande entre :
une première position, dans laquelle elle relie de manière fluidique une troisième conduite fluidique (150, 150') à ladite deuxième conduite fluidique (61, 60) et isole de manière fluidique ladite deuxième conduite fluidique (61, 60) de la deuxième chambre relative (26, 24) ; et
une deuxième position, dans laquelle elle isole de manière fluidique ladite troisième conduite fluidique (150, 150') de ladite deuxième conduite fluidique (61, 60) et relie de manière fluidique ladite deuxième conduite fluidique (61, 60) à la deuxième chambre relative (26, 24) ;
le déplacement de ladite première vanne de commande (151, 151') de ladite deuxième position à ladite première position pendant une durée limitée, lorsque ledit premier organe de commande (7) est dans l'état désactivé et lorsque lesdits paramètres dépassent les valeurs de seuil prédéterminées respectives.
